(19) Europäisches Patentamt / European Patent Office / Office européen des brevets

(11) EP 3 314 046 B1

(12) **EUROPEAN PATENT SPECIFICATION**

(45) Date of publication and mention
of the grant of the patent:
**24.04.2019 Bulletin 2019/17**

(21) Application number: **16747615.9**

(22) Date of filing: **23.06.2016**

(51) Int Cl.:
*C40B 60/14* (2006.01)   *B01J 19/00* (2006.01)
*B01F 13/00* (2006.01)   *B01L 3/00* (2006.01)

(86) International application number:
**PCT/IB2016/000980**

(87) International publication number:
**WO 2016/207721 (29.12.2016 Gazette 2016/52)**

(54) **MECHANICAL DEVICE FOR GENERATING COMBINATORIAL LIBRARY**

MECHANISCHE VORRICHTUNG ZUR ERZEUGUNG EINER KOMBINATORISCHEN BIBLIOTHEK

DISPOSITIF MÉCANIQUE DE PRODUCTION DE BIBLIOTHÈQUE COMBINATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2015 US 201562184560 P**

(43) Date of publication of application:
**02.05.2018 Bulletin 2018/18**

(73) Proprietor: **Hooke Bio Limited
Clonlara, Co. Clare V94 EYK6 (IE)**

(72) Inventors:
• **DAVIES, Mark**
  **Limerick (IE)**
• **GALVIN, Michael**
  **Geashill, Co. Offaly (IR)**

(74) Representative: **Mewburn Ellis LLP
City Tower
40 Basinghall Street
London EC2V 5DE (GB)**

(56) References cited:
**WO-A1-2014/001781    WO-A1-2014/071258
WO-A2-2015/173658**

# Description

## Technical Field

The invention generally relates to a rotating mechanical device for generating a combinational droplet library.

## Background

Up to one-third of the world's population is infected with Mycobacterium tuberculosis (Mtb), the bacterium that causes TB and some strains of TB are drug-resistant. However, treatment with the antibiotic meropenem in combination with the drug clavulanate kills the bacterium. This newly found drug combination offers lifesaving treatment to millions of patients.

Many researchers look for combinations of drugs with medical benefits. For example, researchers are trying to find a combination of drugs with fungilytic activity toward C. neoformans-the most common cause of meningitis-since existing therapies are proving unsatisfactory. C. neoformans causes approximately one-third of all HIV/AIDS-associated deaths, surpassing tuberculosis (TB).

Finding a combination of existing drugs that is effective at treating a disease can require combining large numbers of compounds at varying concentrations into millions of combinations and testing the effects of each of those combinations. Existing liquid handling robots can be used to create fluidic droplets but are also very expensive and do not have any simple mechanical means to combine drugs as part of droplet creation.

WO 2014/001781 proposes a microfluidic system for generating droplets including: a reservoir, a droplet generator, a translator, and an active pressure system. WO 2014/071258 proposes a biological sample preparation device having a linear or circular arrangement of containers, with a connecting structure as a bar or disk. WO 2015/173658, prior art under Article 54(3) only, proposes a microfluidic device that includes channels slidable relative to each other.

## Summary

The invention provides mechanical devices capable of cross-combining various liquids into very large numbers of droplets that each contain a unique combination of materials. Where the liquids contain different drugs or different concentrations of drugs, devices of the invention produce unique combinations of drugs by combining those drugs during a droplet-making process. Each droplet can then be used as a vehicle for an assay. For example, by introducing a cell or target molecule into each droplet, each droplet can be assayed for an effect of that combination of drugs on the cell or target molecule in that droplet. Thus, very large numbers of novel combinations of drugs can be made and assayed for their effects on cells or other biological targets, providing a process and mechanism by which novel combinations of drugs with potentially valuable therapeutic effects can be discovered. Devices according to some embodiments of the invention use rotating rings with multiple liquid compartments. Each liquid compartment has an open port located on the bottom of the liquid compartment. Liquids containing agents, such as drug molecules, are held in the liquid compartments by surface tension. Liquid flow from the liquid compartment only occurs when the port is aligned and is proximate to a channel. The channel is able to slide in order to align with the various ports located on the bottom of the liquid compartments. The channel aligns with a port to allow a portion of liquid to flow from the liquid compartment into the channel. The channel slides to align with another port of a liquid compartment to pick up another portion of liquid. In the channel, the liquid portions combine into a single droplet. The channel aligns with any number of ports to collect various portions of various liquids to create a single droplet. With multiple liquid compartments located on numerous rotating concentric rings, the channel is able to align with various ports to collect liquid portions from a variety of liquid compartments. Because the invention provides mechanical microfluidic devices for creating a combinatorial droplet library, devices of the invention may be used to discover new therapies and drug combinations for treating life-threatening diseases.

In certain aspects, the invention provides a microfluidic device that includes a platform with an axle member extending upwards therefrom; a slot wheel engaged to the axle member and capable of rotation relative to the platform, the slot wheel having a substantially flat, circular upper surface; a first ring member supported by the axle member and disposed about the slot wheel, the first ring member comprising at least one well open at the top and having an open dispensing port at the bottom; and a shuttle engaged with the slot wheel such that rotation of the slot wheel converts to linear motion of the shuttle, wherein the shuttle comprises a collection port and the linear motion of the shuttle aligns the collection port with the dispensing port causing liquid to flow from the well into the collection port. The first ring member is configured to rotate relative to the platform and the rotor. The device may include a second ring, e.g., concentric to the first ring. Preferably the shuttle comprises an elongated body having a distal portion and proximate portion, wherein the proximate portion comprises a pin. The flat, circular upper surface of the slot wheel may contain at least one curved groove to receive the pin. The pin of the shuttle may be configured to slide within the curved groove of the slot wheel.

In some embodiments, the device includes at least one motor to drive rotation of the slot wheel. The curved grooves are configured to convert the rotation of the slot wheel to the linear motion of the shuttle. Preferably the dispensing port of the well bottom has an opening that is less than 1.0 mm in any direction. In preferred embodiments, the dispensing port of the well bottom has an opening that is less than 0.5 mm in any direction.

In preferred embodiments, the ring member comprises a plurality of wells. The distal region of the shuttle may include a dispensing port. The collection port and the dispensing port of the shuttle are in liquid communication through a channel (e.g., with the dispensing port located on surface opposite to the collection port). The dispensing port is configured to align with a collection channel located outside of the platform, such that when aligned, liquid flows from the dispensing port of the shuttle into the collection channel.

In disclosure useful for understanding the invention, there is discussion of a method for combining agents. The method includes containing a first liquid in a first well, wherein the first well comprises a first open port in the bottom thereof; aligning a collection port of a shuttle with the first open port to cause a first aliquot of the first liquid to flow from the first well via the first open port into the collection port; sliding the shuttle to align with a second open port at the bottom of a second well containing a second liquid thereby causing a second aliquot of the second liquid to flow into the collection port; and merging the first aliquot and the second aliquot into a first liquid partition. In some embodiments, the first liquid contains a first agent and the second liquid contains a second agent (e.g., each selected from the group consisting of: a cell, a drug, a molecule, a protein, a virus, a pathogen, a bacterium, and a compound). Aligning the collection port of the shuttle with the first open port may form a gap between the collection port of the shuttle and the first open port. The merging step may occur within a channel extending through the shuttle, the channel being in liquid communication with the collection port.

Aspects of the invention provide a microfluidic device that has a platform with an axle extending upwards from a central portion of the platform. The axle is capable of rotation relative to the platform. A rotor engages the axle and is capable of rotating with the rotational motion of the axle. The rotor has a substantially flat and circular upper surface. A first ring member is supported by the platform and is disposed about the rotor. The first ring member comprises at least one well open at the top and has an open dispensing port at the bottom. The well may be also referred to as a liquid compartment. A shuttle is supported by the platform and is engaged to the rotor, such that a rotational motion of the rotor converts to linear motion of the shuttle. The shuttle has a collection port (also referred to as a channel) and the linear motion of the shuttle aligns the collection port with the dispensing port causing liquid to flow from the well into the collection port.

Aspects of the invention incorporate a second ring member that is concentric to the first ring member. Each ring is able to rotate independently of each other and of the rotor. In other aspects, the rings are able to rotate dependently on each other, or may be engaged to one another such that rotational motion of one ring is converted into rotational motion of another ring.

In some aspects, the shuttle may have an elongated body having a distal region and a proximate region. A pin extending from the body of the shuttle is located at the proximate region of the shuttle. The flat and circular upper surface of the rotor contains at least one curved groove to receive the pin. In some embodiments, the pin is configured to slide within the curved groove of the rotor. When a force is applied to the axle to rotate the axle, the rotor also rotates. When the rotor rotates, the rotational motion of the rotor causes the pin to slide in the curved grooves. The pin sliding in the curved grooves causes the linear motion of the shuttle. Thus, the rotational motion of the rotor causes the linear motion of the shuttle. In some aspects of the invention, the curved grooves comprise protrusions or indentions to catch the pin and temporarily stop the linear movement of the shuttle. In other aspects, the pin moves back and forth along the length of the curved grooves.

In some aspects, the devices of the invention have multiple ring members. The ring members may be concentric to one another, and may rotate together or independently. Each ring may comprise a plurality of wells, or liquid compartments. Each liquid compartment has an open port at the bottom of the compartment. The open port may be referred to herein as a dispensing port. The dispensing port, or open port, may have any opening that is less than 0.5 mm in any direction, or less than 1.0 mm in any direction. Liquid is retained in the liquid compartment by surface tension, and liquid only flows from the dispensing port if a channel or collection port is aligned with the dispensing port.

In some embodiments of the invention, the distal region of the shuttle comprises a collection port and a dispensing port. The collection port of the shuttle aligns with a dispensing port of a liquid compartment. The dispensing port of the shuttle is able to align with a channel or another port. In some embodiments, the dispensing port of the shuttle aligns with a channel to deliver the formed droplet. In some embodiments, the dispensing port and the collection port are in liquid communication. In some embodiments, the dispensing port and the collection port are connected by a channel. In some embodiments, the collection port collects a plurality of droplets that is held in the channel connecting the collection port and the dispensing port. In some embodiments, the shuttle aligns with a channel to deliver to the plurality of droplets. The channel may be connected to the device, or could be associated with the device. In some embodiments, the dispensing port and the collection port are placed on opposite surfaces of the shuttle at the distal region.

There is discussion herein of methods for combining agents into a droplet.

A first liquid comprising a first agent is contained within a first well. The first well has a first open dispensing port in the bottom of the first well. A collection port located on an elongated member aligns with the first open dispensing port so that a portion of the first liquid flows from the first well into the collection port. The elongated member is then slid to align with a second dispensing port of a second well containing a second liquid comprising a second agent. A portion of the second liquid flows into the collection port. The first and second liquids are merged into a single droplet. Thus, the droplet contains the first and second agents. The process could also include a third well containing a third liquid comprising a third agent. In some embodiments, the droplets contain a plurality of portions of liquids, formed by the devices of the invention.

Brief Description of the Drawings

FIG. 1 shows a microfluidic device of the invention.
FIG. 2 gives a front view of the microfluidic device of FIG. 1.
FIG. 3 gives a top view of the microfluidic device of FIG. 1.
FIG. 4 gives a cutaway view of the microfluidic device of FIG. 1.
FIG. 5 shows the drive assembly of the microfluidic device of FIG. 1.
FIG. 6 shows a first ring member of the microfluidic device of FIG. 1.
FIG. 7 shows the first ring member of the microfluidic device of FIG. 1.
FIG. 8 shows a base member of the microfluidic device of FIG. 1.
FIG. 9 shows an axle member of the microfluidic device of FIG. 1.
FIG. 10 shows an inner ring of the microfluidic device of FIG. 1.
FIG. 11 shows the inner ring shaft of the microfluidic device of FIG. 1.
FIG. 12 shows a slot wheel of the microfluidic device of FIG. 1.
FIG. 13 shows the slot wheel connected to a slot wheel base.
FIG. 14 shows a shuttle carrier ring of the microfluidic device of FIG. 1.
FIG. 15 shows a cross-sectional view through the microfluidic device of FIG. 1.
FIG. 16 shows a basal component for the microfluidic device of FIG. 1.
FIG. 17 shows a multi-ring device for liquid sample combinations.
FIG. 18 is a cutaway view of the multi-ring device of FIG. 17.
FIG. 19 gives a close-up cutaway view of the multi-ring device of FIG. 17.
FIG. 20 shows a shuttle and slot wheel of the device of FIG. 17.
FIG. 21 is a diagram illustrating operation of the multi-ring device of FIG. 17.

FIG. 22 shows a multi-well microfluidic device.
FIG 23 gives a cutaway view of the multi-well microfluidic device of FIG. 22.
FIG. 24 is a close-up of the multi-well microfluidic device of FIG. 22.
FIG. 25 gives a cross-section through the the multi-well microfluidic device of FIG. 22.
FIG. 26 shows a slot wheel of the multi-well microfluidic device of FIG. 22.
FIG. 27 diagrams steps of a method for combining agents.
FIG. 28 is a chart of combination that may be made using a device of the invention.

Detailed Description

The invention provides microfluidic devices for combining liquids into a combinatorial library of different combinations. The microfluidic devices have a shuttle that is able to align with wells to obtain portions of liquids to be combined into a single liquid volume such as a droplet. Thus, using the rotating device of the current invention, numerous liquid samples can be cross-combined into volumes that contain all possible cross-combinations of the liquid samples. The microfluidic devices can include any number of wells to combine liquids, thus yielding billions of possible combinations.

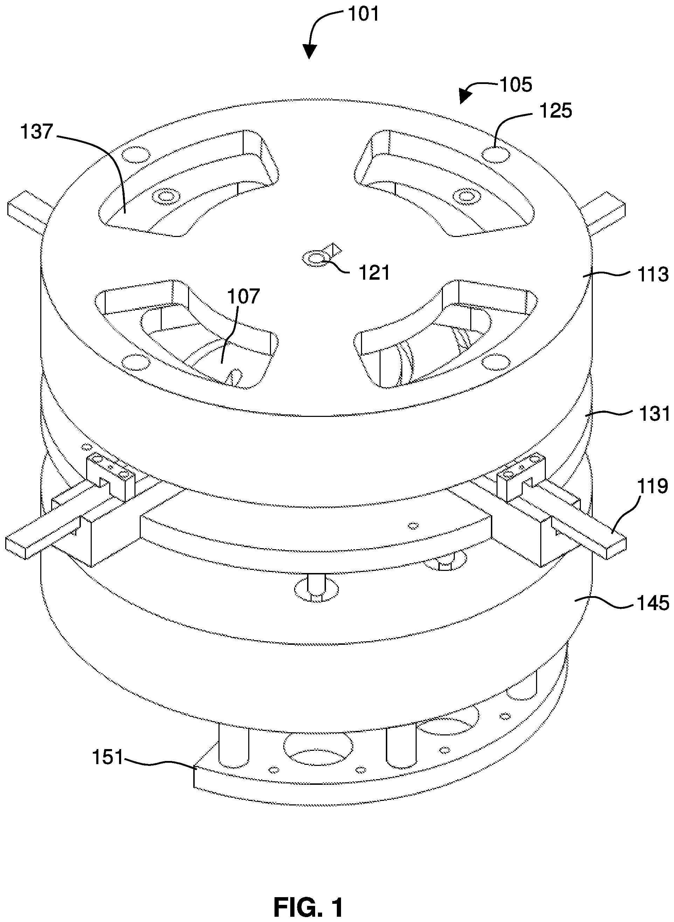

FIG. 1 shows a microfluidic device 101 that includes a platform 145 with an axle member 121 extending upwards therefrom and a slot wheel 107 engaged to the axle member 121. The slot wheel 107 is capable of rotation relative to the platform 145. The microfluidic device 101 includes a first ring member 113 supported by the axle member 121 and disposed about the slot wheel 107. The first ring member 113 includes at least one well 125 therein, open at the top. At least one shuttle 119 is engaged with the slot wheel 107 such that rotation of the slot wheel 107 converts to linear motion of the shuttle 119.

Slot wheel 107 comprises curved grooves 110 and may be rotated by the axle member 121. The device comprises a shuttle carrier ring 131 to support shuttle 119. The microfluidic device 101 includes a supporting base 145. By inclusion of one or more motors connected to the rings and slot wheel, or by manual control, the microfluidic device 101 may be used form liquid volumes containing combinatorial libraries of numerous agents.

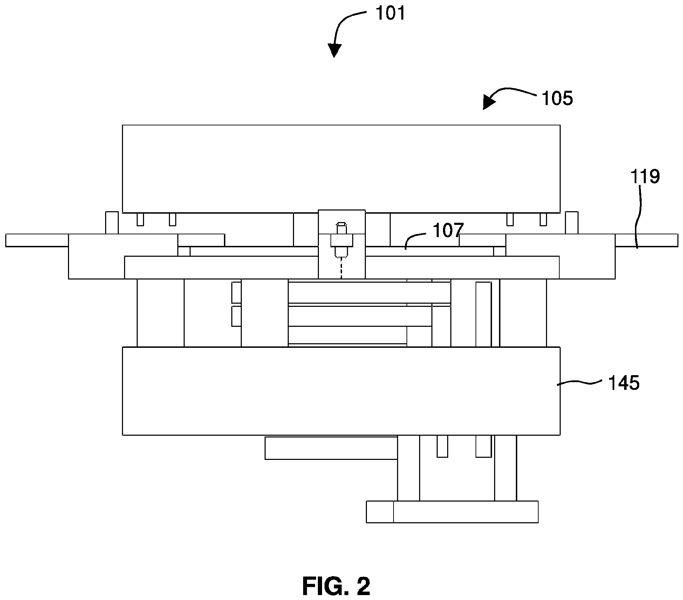

FIG. 2 gives a front view of the microfluidic device 101 showing the ring assembly 105, which includes an first ring member 113 and an second ring 137. The microfluidic device 101 also includes an axle member 121 to support the ring assembly 105. At least the first ring member 113 may be configured to rotate relative to the platform 145, the slot wheel 107, or both. It should be appreciated that in order to rotate rings independently of each other, systems and devices of the invention may use a plurality of axle member 121. Additionally, the device may comprise a plurality of gears coupled to the drive shafts or axles to turn the rings at various speeds.

It should be appreciated that the rings may be turned at the same speed, or at varying speeds. The microfluidic device 101 further includes a slot wheel 107.

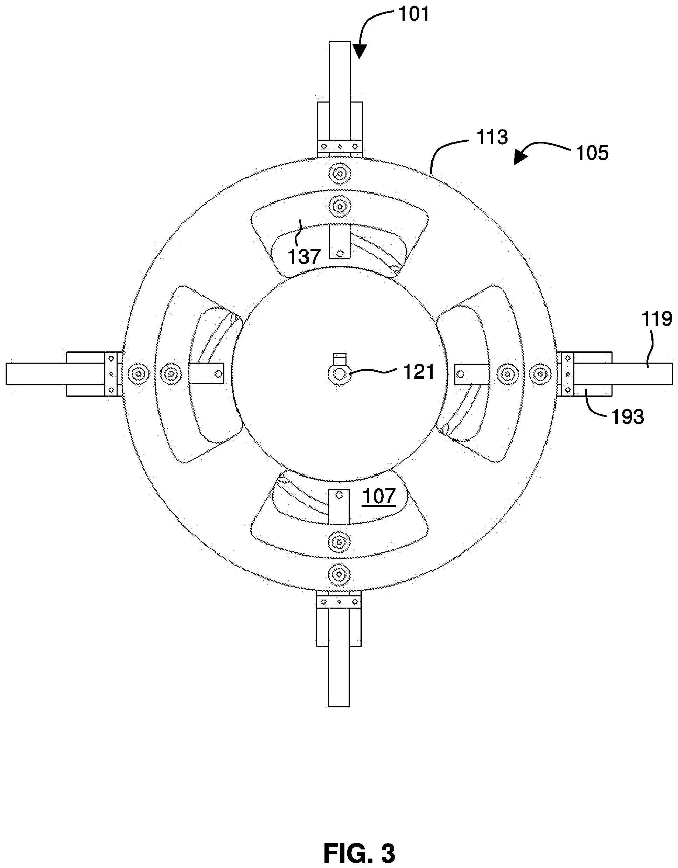

FIG. 3 gives a top view of the microfluidic device 101, showing details of the ring assembly 105, as well as four of the shuttle 119. An end of the axle member 121 can be seen supporting first ring member 113. Also visible is a portion of the second ring 137. Preferably the second ring 137 is concentric to the first ring 113. It should be appreciated that the device many comprise several drive shafts and gears to rotate the rotor and rings at various speeds. A single motor, or several motors may be used to turn the drive shafts, which are coupled to gears, which are coupled to rotors and rings of the device to accomplish rotation. The slot wheel 107 comprises curved slots 309 for receiving a pin of a shuttle 1302. Each ring many comprise at least one liquid well 125.

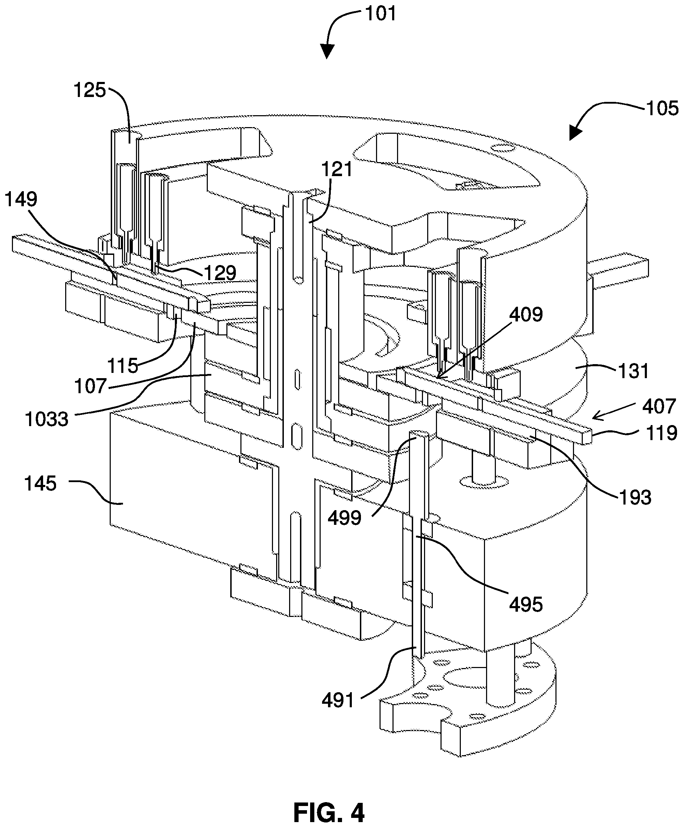

FIG. 4 gives a cutaway view of the microfluidic device 101. At the top of the device 101 sits the ring assembly 105, which includes the first ring member 113 and the second ring 137 supported by the axle member 121 and disposed about the slot wheel 107. The first ring member 113 includes at least one well 125 open at the top and having an open dispensing port 129 at the bottom. The shuttle 119 is engaged with the slot wheel 107 such that rotation of the slot wheel 107 converts to linear motion of the shuttle 119. The shuttle 119 has a collection port 149 and the linear motion of the shuttle 119 aligns the collection port 179 with the dispensing port 129 causing liquid to flow from the well 125 into the collection port 149 of the shuttle 119.

The base 145 of the micro fluidic device 101 presents a shuttle carrier ring 131 to aid in the movement of the shuttles 119 through the positioning of shuttle guides 193. When the shuttle 119 is pushed or pulled towards the center of the slot wheel 107 by the curved grooves 110, the shuttle guides 193 constrain the total movement of the shuttle such that the shuttle 119 slides back and forth under the rings.

The shuttle 119 has an elongated body having a distal portion 407 and proximal portion 409. The proximal portion 409 of the shuttle 119 has a pin 115. A flat, circular upper surface of the slot wheel 107 includes at least one curved groove to receive the pin 115. The pin 115 is configured to slide within the curved groove of the slot wheel 107. The microfluidic device 101 may include at least one motor to drive rotation of the slot wheel 107.

Preferably, the curved grooves 110 of the slot wheel 107 are configured to convert the rotation of the slot wheel 107 to the linear motion of the shuttle 119. In some embodiments, the dispensing port 129 at the bottom of the well 125 has an opening that is less than 1.0 mm in any direction. In preferred embodiments, the dispensing port 129 at the bottom of the well 125 has an opening that is less than 0.5 mm in any direction. Preferably, the ring member 113 includes a plurality of wells. In the embodiment shown in FIGS. 1-20, the ring member 113 has 4 wells.

The proximal portion 407 of the shuttle 119 may include a dispensing port. The collection port 149 and the dispensing port of the shuttle 119 are in liquid communication through a channel that extends through the shuttle 119 (e.g., with the dispensing port located on surface opposite to the collection port 149). The dispensing port may configured to align with a collection channel located outside of the platform, or on the platform outside of the ring assembly 145, such that when aligned, liquid flows from the dispensing port of the shuttle into the collection channel.

Each ring and the slot wheel may be driven by its own motor, drive shaft, and engagement surface. As shown in FIG. 4. motor 495 is built into the base 145 and the motor turns drive shaft 491. The drive shaft 491 turns an inner base member 1033 via an engagement surface 499. The engagement surface 499 may be provided by meshing gears on the drive shaft 491 and the inner base member 1033, or the engagement surface 499 may be provided by friction. The first ring member 113 and the slot wheel may be driven by other instances of such mechanisms arrayed around the base 145.

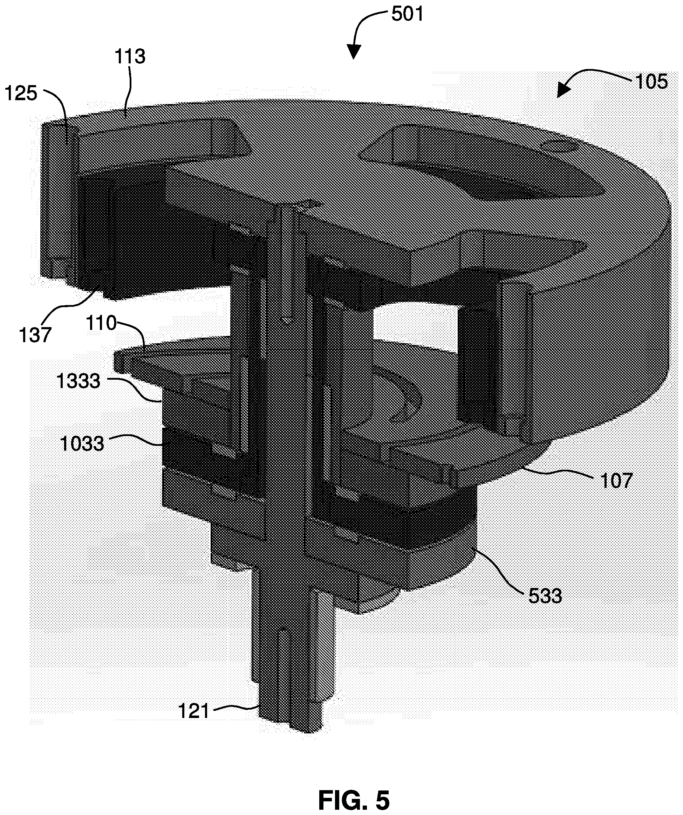

FIG. 5 shows the drive assembly 501 of the microfluidic device 101. The ring assembly 105 is supported by axle member 121 in relationship to slot wheel 107. The slot wheel 107 includes at least one curved groove 110. The ring assembly 105 includes the second ring 137 concentric to the first ring 113.

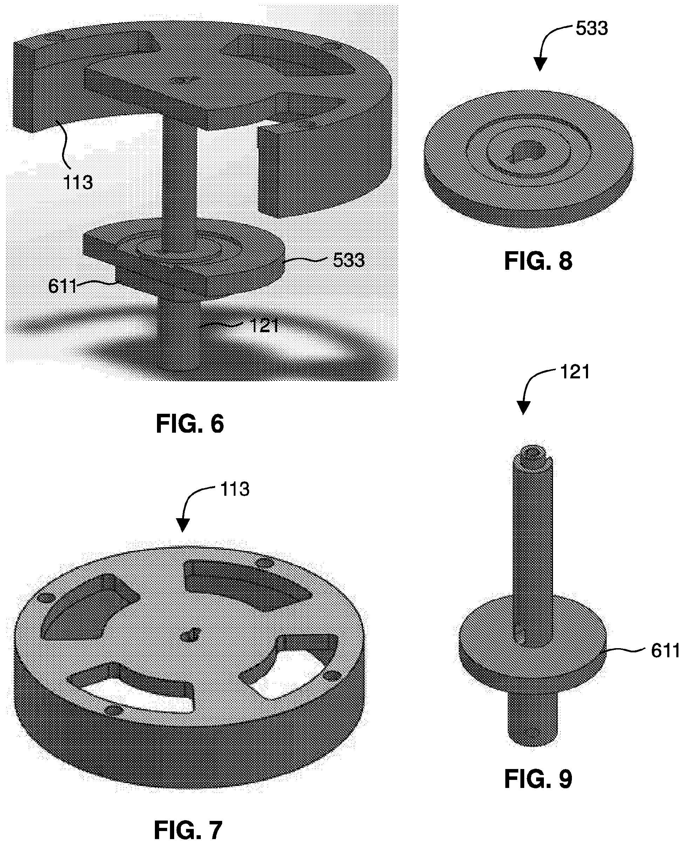

FIG. 6 shows the first ring member 113 supported by the axle member 121. The axle member 121 incudes a flange 611 that supports the a member 533.

FIG. 7 shows the first ring member 113 for use in the microfluidic device. The first ring member 113 may be formed of any suitable material, such as metal or plastic. For example, the first ring member 113 (and the other components) may be made of cast, forged, or molded metal such as aluminum, steel, or titanium or may be made of plastic, e.g., injection-molded plastic. The first ring member 113 may include a plurality of liquid compartments 125 with open bottom ports 129. The first ring member 113 may comprise an opening to receive a drive shaft, axle or gear. The first ring member 113 may comprise indentions and protrusions to couple to one or more drive shafts or gears to effectuate rotation of the ring within the rotating microfluidic device. It should also be appreciated that the ring structure may be coupled to other components of the rotating microfluidic device to support the ring.

FIG. 8 shows the base member 533.

FIG. 9 shows the axle member 121 with flange 611. One or more motor with drive shafts and gears may be included to rotate the various components of the device including the slot wheel and rings. An axle or drive shaft may comprise indentions or protrusions to engage gears and components of the device to accomplish rotation.

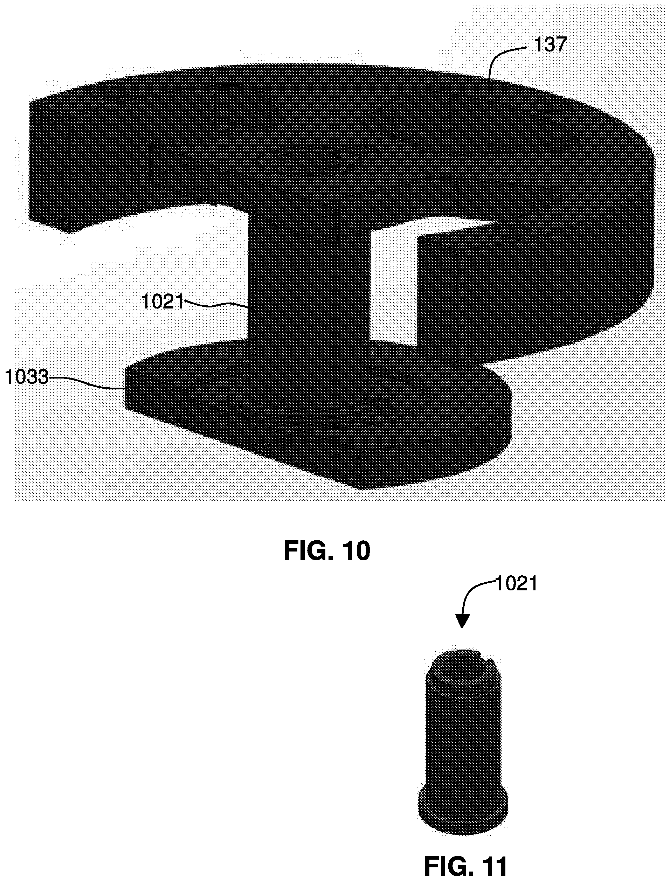

FIG. 10 shows the inner ring 137 supported above an inner base member 1033 by an inner ring shaft 1021 (which actually extends around axle member 121 within the ring assembly 105).

FIG. 11 shows the inner ring shaft 1021 used to support the inner ring 133 in the ring assembly 105.

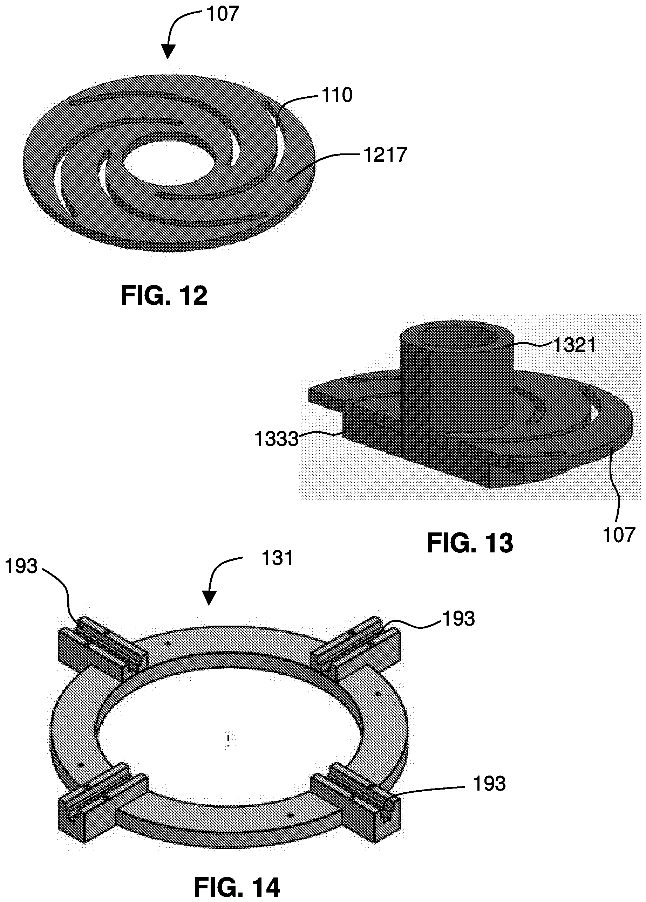

FIG. 12 shows the slot wheel 107. The slot wheel has a substantially flat, circular upper surface 1217 and one or more curved grooves 110 therein. The slot wheel 107 comprises curved grooves 110 for receiving a pin of a shuttle. The slot wheel 107 also comprises an opening for receiving or coupling to one or more drive shafts or gears to effectuate rotation of the rotor within the rotating microfluidic device.

FIG. 13 shows the slot wheel 107 connected to slot wheel base 1333 and slot wheel shaft 1321.

FIG. 14 shows the shuttle carrier ring 131. The shuttle carrier ring 131 may be coupled to the rotating microfluidic device to support and aid in the movement of the shuttles of the devices. The structure may comprise shuttle guides 193 to support the shuttle 119. In some embodiments, the shuttle carrier ring 131 is to limit the movement of the shuttle 119, so that the shuttle 119 only moves laterally or linearly to align with open bottom ports of the liquid compartments.

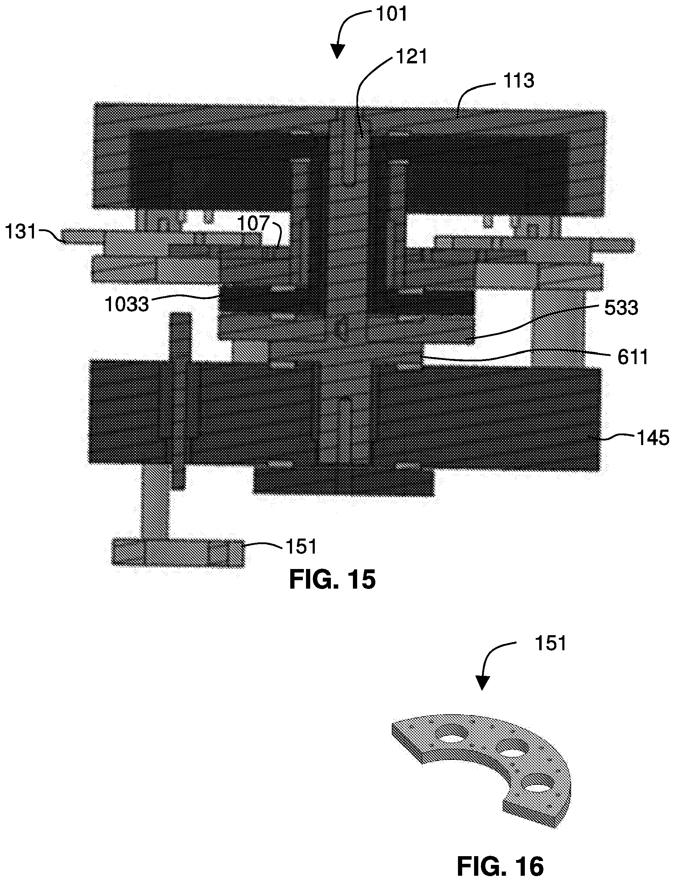

FIG. 15 shows a cross-sectional view through the middle of the microfluidic device 101, and shows how the shuttle carrier ring 131 sits around the slot wheel 107 beneath the ring assembly 105, all surrounding the axle member 121.

FIG. 16 shows a basal component to serve as a base and/or motor mount for the microfluidic device 101.

In FIGS. 1-15, the microfluidic device 101 is depicted as including an second ring 137 and an first ring member 113, each with four liquid wells 125. Thus the microfluidic device 101 includes 8 wells.

Components of the microfluidic device 101 may be constructed from any suitable material, including silicon, plastic, quartz, glass, plastic, metal, stainless steel, or other suitable materials. Also, it should be appreciated that the size, shape and complexity of the rotating microfluidic devices depends on the materials used and the fabrication processes available for those materials. Construction, formation, machining, and assembling microfluidic devices are well known in the art. The process of forming the components of the microfluidic devices can include wet chemical etching, photolithographic techniques, controlled vapor deposition, injection molding, ink-jet technology, and laser drilling into a substrate.

Importantly, channels and ports of the invention are configured so that when not aligned with another channel or port, there is no liquid flow there between. When aligned with another channel or port, liquid flows from the channel or port into the other channel or port. Alignment of channels can include complete or partial alignment. In complete alignment, the center axes of two microfluidic channels are aligned. In partial alignment, the center axes are not aligned, however, there is partial overlap of the first and second channels such that the distance between the center axes is sufficiently small so that flow between the two microfluidic channels occurs. In complete misalignment, there is no overlap between the channels and the distance between the center axes is sufficiently great so that flow between the two microfluidic channels does not occur. In the present invention, alignment is meant to encompass both complete and partial alignment. The devices of the invention flow liquid between two microfluidic channels or ports even in the cases of partial alignment.

In an aspect of the invention, when a channel or port is aligned with another channel or port, a gap or an air gap may exist there between. For example an air gap may exist between one port and another port of the invention. In an aspect of the invention, the air gap may comprise any known gas, at any temperature and pressure. The air gap may be at atmospheric pressure and be comprised of air. However, the air gap is not limited to atmospheric pressure or air. In some embodiments, the devices of the present invention may be completely or partially enclosed within a chamber and the chamber may be filled with a gas other than air. The pressure can be above or below atmospheric pressure and the temperature can be at, above, or below room temperature, which is about 37 degrees Celsius. In particular embodiments, gravitational force is used to produce and control flow within the system. Thus, gravity drives the flow between the liquid compartment within a ring and the channel with the shuttle.

The liquid compartments or channels form the boundary for a liquid. A channel generally refers to a feature on or in the system (sometimes on or in a substrate) that at least partially directs the flow of a liquid. In some cases, the channel may be formed, at least in part, by a single component, e.g., an etched substrate or molded unit. The channel can have any cross-sectional shape, for example, circular, oval, triangular, irregular, square or rectangular (having any aspect ratio), or the like, and can be covered or uncovered (i.e., open to the external environment surrounding the channel).

The liquid within the liquid compartments or channels may partially or completely filled with liquid. In some cases the liquid may be held or confined within the liquid compartment or channel or port, for example, using surface tension. The channels or ports may be of a particular size or less, for example, having a largest dimension perpendicular to liquid flow of less than or equal to about 5 mm, less than or equal to about 2 mm, less than or equal to about 1 mm, less than or equal to about 500 microns, less than or equal to about 200 microns, less than or equal to about 100 microns, less than or equal to about 60 microns, less than or equal to about 50 microns, less than or equal to about 40 microns, less than or equal to about 30 microns, less than or equal to about 25 microns, less than or equal to about 10 microns, less than or equal to about 3 microns, less than or equal to about 1 micron, less than or equal to about 300 nm, less than or equal to about 100 nm, less than or equal to about 30 nm, or less than or equal to about 10 nm or less in some cases. Of course, in some cases, larger channels, tubes, etc. can be used to store liquids in bulk and/or deliver a liquid to the channel. The channels of the device of the present invention can be of any geometry as described. However, the channels of the device can comprise a specific geometry such that the contents of the channel are manipulated, e.g., sorted, mixed, prevent clogging, etc. For example, for channels that are configured to carry droplets, the channels of the device may preferably be square, with a diameter between about 2 microns and 1 mm. This geometry facilitates an orderly flow of droplets in the channels. In some embodiments, the channel is a capillary.

The dimensions of the channels and ports, along with the time control the amount or volume of liquid that is able to flow from a liquid compartment into the shuttle. The dimensions of the channel may also be chosen, for example, to allow a certain volumetric or linear flow rate of liquid in the channel. The number of channels and the shape of the channels can be varied by any method known to those of ordinary skill in the art. The amount of liquid that flows from the liquid compartment into the shuttle can also be controlled by the speed of the shuttle. The longer time the shuttle is partially and completely aligned with the open bottom port of a liquid compartment, the greater the volume of liquid flows there between. Thus, one of skill in the art will appreciate that the speed of the shuttle can be controlled in order to control the amount of liquid from a liquid compartment flows into a port or channel of the shuttle.

To prevent material (e.g., cells and other particles or molecules) from adhering to the sides of the channels, ports, or liquid compartments, they may have a coating which minimizes adhesion. Such a coating may be intrinsic to the material from which the device is manufactured, or it may be applied after the structural aspects of the channels have been fabricated. TEFLON (polymer, commercially available from DuPont, Inc.), or polytetrafluoroethylene (PTFE), is an example of a coating that has suitable surface properties. Channels, ports, or liquid compartments may be constructed from PTFE, or PTFE containing materials. Additionally, or in the alternative, channels, ports, or liquid compartments may be coated with PTFE. In a preferred embodiment of the invention, the walls of the interior portion of the microfluidic channels are composed of PTFE, or a material containing PTFE, to render the interiors of the microfluidic channels hydrophobic.

The surface of the channels, ports, or liquid compartments of the microfluidic system can be coated with any anti-wetting or blocking agent for the dispersed phase. The channels, ports, or liquid compartments can be coated with any protein to prevent adhesion of the biological/chemical sample. For example, in one embodiment the channels are coated with BSA, PEG-silane and/or fluorosilane. For example, 5 mg/ml BSA is sufficient to prevent attachment and prevent clogging. In another embodiment, the channels, ports, or liquid compartments can be coated with a cyclized transparent optical polymer obtained by copolymerization of perfluoro (alkenyl vinyl ethers), such as the type sold by Asahi Glass Co. under the trademark Cytop. In such an embodiment, the coating is applied from a 0.1-0.5 wt % solution of Cytop CTL-809M in CT-Solv 180. This solution can be injected into the channels, ports, or liquid compartments of a microfluidic device via a plastic syringe. The device can then be heated to about 90°C for 2 hours, followed by heating at 200°C for an additional 2 hours. In another embodiment, the channels, ports, or liquid compartments can be coated with a hydrophobic coating of the type sold by PPG Industries, Inc. under the trademark Aquapel (e.g., perfluoroalkylalkylsilane surface treatment of plastic and coated plastic substrate surfaces in conjunction with the use of a silica primer layer) and disclosed in U.S. Pat. No. 5,523,162. By fluorinating the surfaces of the channels, ports, or liquid compartments, the continuous phase preferentially wets the channels and allows for the stable generation and movement of droplets through the device. The low surface tension of the channel walls thereby minimizes the accumulation of channel clogging particulates.

The surface of the channels, ports, or liquid compartments in the microfluidic device can be also fluorinated to prevent undesired wetting behaviors. For example, a microfluidic device can be placed in a polycarbonate dessicator with an open bottle of (tridecafluoro-1,1,2,2-tetrahydrooctyl) trichlorosilane. The dessicator is evacuated for 5 minutes, and then sealed for 20-40 minutes. The dessicator is then backfilled with air and removed. This approach uses a simple diffusion mechanism to enable facile infiltration of channels of the microfluidic device with the fluorosilane and can be readily scaled up for simultaneous device fluorination.

It should be appreciated that the liquid compartments of the invention may contain any type of liquid. As discussed above, the microfluidic systems of the present invention are capable of controlling the direction and flow of liquids and entities within the device. The term flow generally refers to any movement of liquid or solid through a device of the invention or in a method as discussed herein, and encompasses without limitation any liquid stream, and any material moving with, within or against the stream, whether or not the material is carried by the stream. The application of any force may be used to provide a flow, including without limitation, pressure, capillary action, electro-osmosis, electrophoresis, dielectrophoresis, optical tweezers, gravity, and combinations thereof, without regard for any particular theory or mechanism of action, so long as molecules, cells or virions are directed for detection, measurement or sorting according to the invention. Specific flow forces are described in further detail herein.

By containing a variety of different entities and agents in the liquids of the compartments, the present invention can be used to form combinatorial libraries portioned into liquid volumes by operating to align the shuttle serially with different ones of the wells 125. Additionally, one or more of the liquids may be immiscible with a liquid in one of the wells, or the liquid volumes prepared in the shuttle may be delivered to an immiscible carrier fluid to form liquid droplets. A droplet, as used herein, is an isolated portion of a first liquid that substantially or completely surrounded by a second liquid. In some cases, the droplets may be spherical or substantially spherical; however, in other cases, the droplets may be non-spherical, for example, the droplets may have the appearance of blobs or other irregular shapes, for instance, depending on the external environment. As used herein, a first entity is surrounded by a second entity if a closed loop can be drawn or idealized around the first entity through only the second entity. The dispersed phase liquid can include a biological/chemical material. The biological/chemical material can be tissues, cells, particles, proteins, antibodies, amino acids, nucleotides, small molecules, and pharmaceuticals. The biological/chemical material can include one or more labels known in the art. In fact any type of label can be incorporated into the droplets. The label can be a DNA tag, dyes or quantum dot, or combinations thereof.

Other embodiments of the invention use similar principles but with other numbers of rings, or wells per ring, to achieve greater speeds and flexibility.

In certain embodiments, the invention provides a multi-ring microfluidic devices for combining aliquots of liquids, through the use of a shuttle that translates radially relative the rings to align beneath the wells and thereby take aliquots of liquids from those wells. This allows multiple liquids be combined into a single small volume. Because the microfluidic devices may include a large number of rings or wells, the devices may form large numbers (e.g., billions) of possible sample combinations.

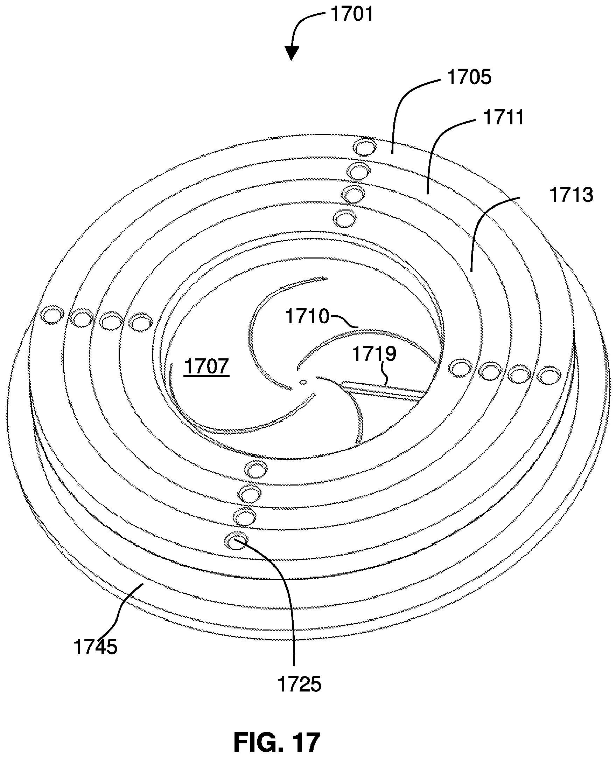

FIG. 17 shows a multi-ring device 1701 for liquid sample combinations The multi-ring device 1701 includes at least a first ring 1705, a second ring 1711, and a third ring 1713, all supported by a platform 1745. The device 1701 also includes a fourth ring. Each ring may rotate independently of each other. Each of the first ring 1705, second ring 1711, and third ring 1713 may include one or a number of wells 1725. The multi-ring device 1701 includes a shuttle 1719 positioned to travel beneath the first ring 1705, the second ring 1711, and the third ring 1713. The shuttle 1719 engages with a slot wheel 1707 that propels radial translation of the shuttle 1719.

The wells 1725 are able to contain liquids and optionally one or more of an agent, drug molecule, virus, nucleic acid, molecule, element, bacterium, compound, etc.

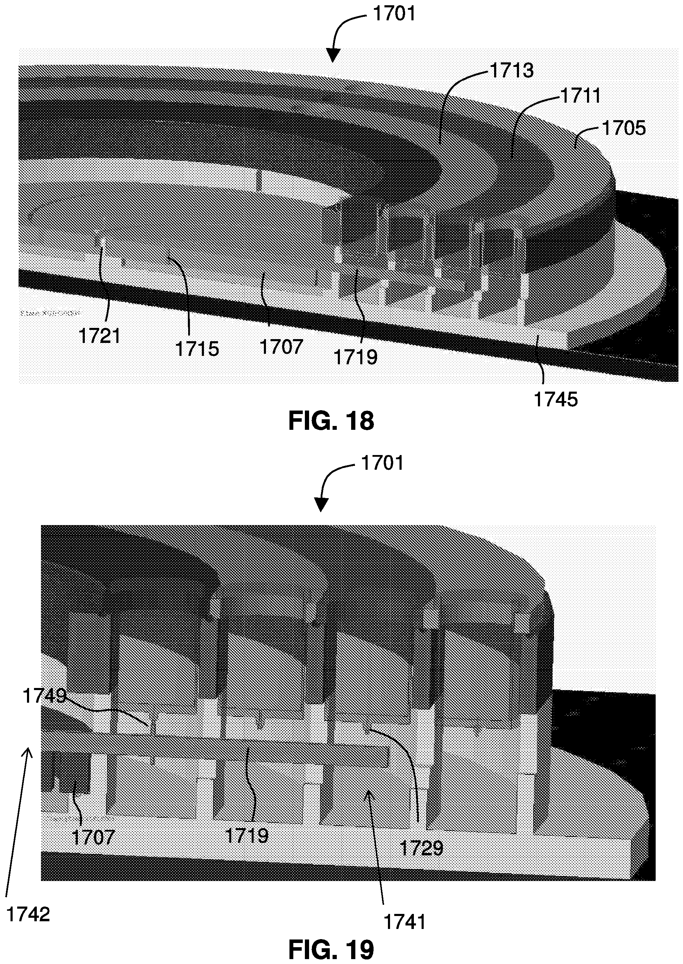

FIG. 18 is a cutaway view of the multi-ring device 1701. Each of the first ring 1705, the second ring 1711, the third ring 1713, and the fourth ring may rotate independently of each other. Also, each rotating ring may be stationary, or rotate with another ring. The first ring 1705, the second ring 1711, and the third ring 1713 may comprise any number of wells 1725. Each well 1725 has an open bottom port 1729. The open bottom port 1729 is configured so that liquid only flows from the open bottom port when aligned with a channel or port. The liquid is held in the liquid compartment by surface tension and other forces. When the open bottom port 1729 aligns with another channel or port, liquid flow there between occurs. Liquid may flow due to gravity, or by an applied force such as a pump or pneumatic pressure, or a combination thereof.

The multi-ring device 1701 includes a shuttle 1719 positioned to travel beneath the first ring 1705, the second ring 1711, and the third ring 1713. The shuttle 1719 includes a channel 1739 therein. The channel 1739 may extend along the inside of the shuttle 1719 (e.g., the shuttle 1719 may be a hollow bar).

When the channel 1739 aligns with open bottom port 1729, liquid flows from the well 1725 into the channel 1739. Importantly, when channel 1739 is not aligned with open bottom port 1729, liquid does not flow and the liquid is retained in the liquid compartment. The shuttle 1719 has a pin 1715. The pin 1715 is able to slide in the curved grooves 1710 in the slot wheel 1707. The slot wheel 707 turns about axle 1721. The multi-ring device 1701 is supported by platform 1745.

FIG. 19 gives a close-up cutaway view of the multi-ring device 1701, showing the shuttle 1719, the open bottom port 1729 of the well 1725, and a collection port 1749 on shuttle 1719. The shuttle 1719 has a distal end 1741 and a proximate end 1742.

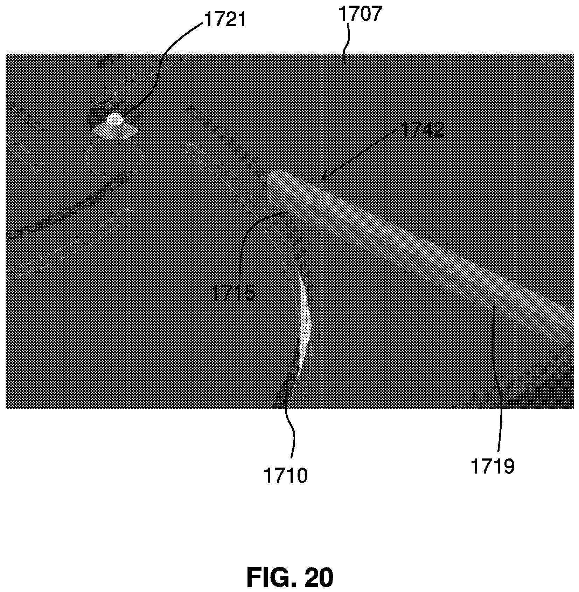

FIG. 20 shows how the shuttle 1719 engages at its proximal end 1742 with a slot wheel 1707 that propels radial translation of the shuttle 1719. The slot wheel 1707 includes curved grooves 1710. The curved grooves 1710 are configured to receive a pin 1715 extending beneath the shuttle 1719. The slot wheel 1737 turns on an axle 1721.

It should be appreciated by one of skill in the art that the slot wheel 1707 can be driven by a drive shaft, gears, and a motor. When the slot wheel 1707 turns, the pin 1715 slides within one of the curved grooves 1710. This rotational motion of slot wheel 1707 causes the shuttle 1719 to move laterally or linearly. The lateral movement of the shuttle 1719 allows the channel 1739 to align with various open bottom ports 210 of the liquid compartments 291 (also referred to as wells).

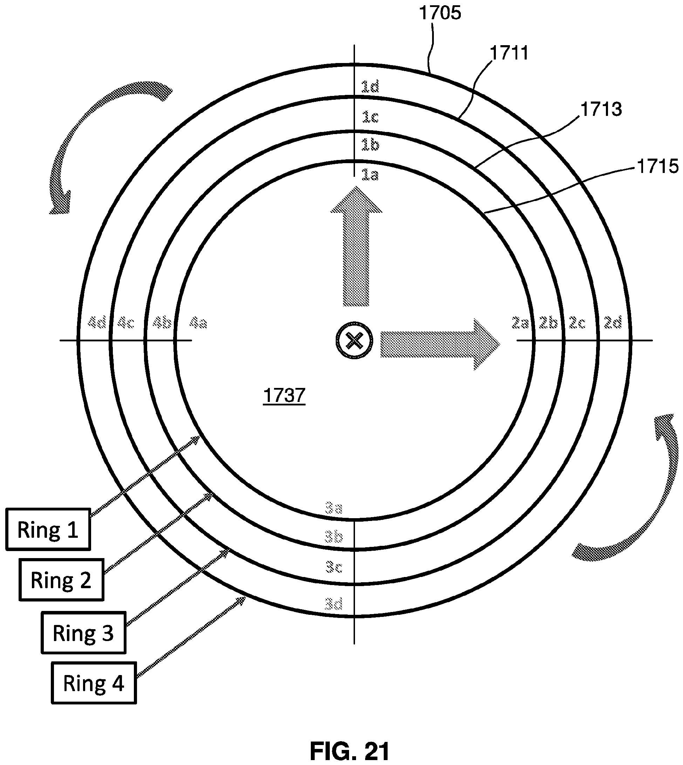

FIG. 21 is a diagram illustrating operation of the multi-ring device 1701. Each of the first ring 1705, the second ring 1711, the third ring 1713, and the fourth ring 1715 includes 4 wells, labeled as 1a, 1b, 1c, 1d, 2a, 2b, 2c, 2d, 3a, 3b, 3c, 3d, 4a, 4b, 4c, and 4d. As the slot wheel 1737 rotates, the shuttle (not shown) moves in a linear manner, indicated by the arrows. As explained above, the pin within the curved grooves of the rotor allows for the rotational motion of the rotor to be converted into the linear motion of the shuttle. Thus, the channel within the shuttle is able to align with the open bottom ports of the liquid compartments to have liquid flow from the liquid compartment into the channel of the shuttle.

Each liquid compartment may contain an agent or entity, such as drug, in solution. The drug solutions may be arranged in a four ring format with all the "a" dilutions positioned at the innermost ring, and all the "d" dilutions positioned at the outer ring. The binomial coefficient formula is utilized to determine the total possible number of droplet combinations from this array (i.e. 16C3). This formula is:

$$C= n!/r!(n-r)!$$

Where n is the total number of drugs = 16; and r is the number of subsets = 3.

There are 3 possible methods of movement for generating all outcome droplets:

Circumferential only (C) - combinations located only within the same ring (Example 1a,2a,3a); radial only (R) - combinations located along the radius of different rings (Example 1a,2b,3c); and circumferential and radial (C+R) - combinations located both on the same ring and along the radius of different rings (Example 1a,2a,3b). The number of (C) movements to (R) movements to (C+R) movements occurs in a certain ratio. This ratio differs depending on the number of dilutions used in the array, and the number of combinations of droplets being generated. The number of drugs in the array does not affect the ratio. Following a logical sequence, (C) movements have the least amount of combinations, followed by (R) movements with (C+R) movements having the most number of combinations. Therefore, it is intended to generate all (C) movements first, then generate all (R) movements and finally generate all (C+R) movements.

Thus it can be seen that FIGS. 17-21 show a microfluidic device 1701 that includes a platform 1745 with an axle member 1721 extending upwards therefrom; a slot wheel 1707 engaged to the axle member 1721 and capable of rotation relative to the platform 1745, the slot wheel 1707 having a substantially flat, circular upper surface; a first ring member 1705 supported by the axle member 1721 and disposed about the slot wheel 1707, the first ring member 1705 comprising at least one well 1725 open at the top and having an open dispensing port 1729 at the bottom; and a shuttle 1719 engaged with the slot wheel 1707 such that rotation of the slot wheel 1707 converts to linear motion of the shuttle 1719, wherein the shuttle 1719 comprises a collection port 1749 and the linear motion of the shuttle 1719 aligns the collection port 1749 with the dispensing port 1719 causing liquid to flow from the well 1725 into the collection port 1749.

Embodiments of the invention may include large numbers of wells on each ring.

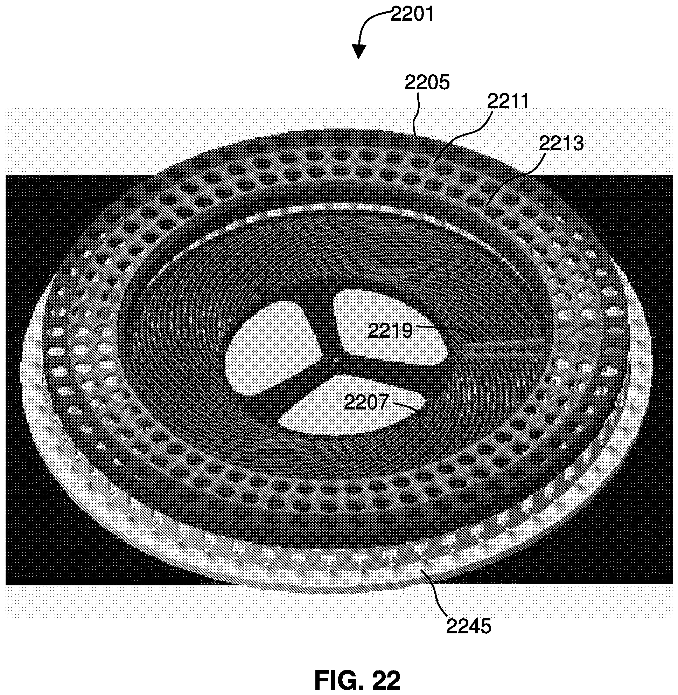

FIG. 22 shows a multi-well microfluidic device 2201. The multi-well microfluidic device 2201 includes a plurality of rotating rings, such as first ring 2205, second ring 2211, and third ring 2213. Each of the first ring 2205, the second ring 2211, and the third ring 2213 include a plurality of liquid wells 2225. The plurality of rotating rings are supported relative to a slot wheel 2207 and the slot wheel includes a plurality of curved grooves 2210. the multi-well microfluidic device 2201 includes a plurality of shuttles 2219.

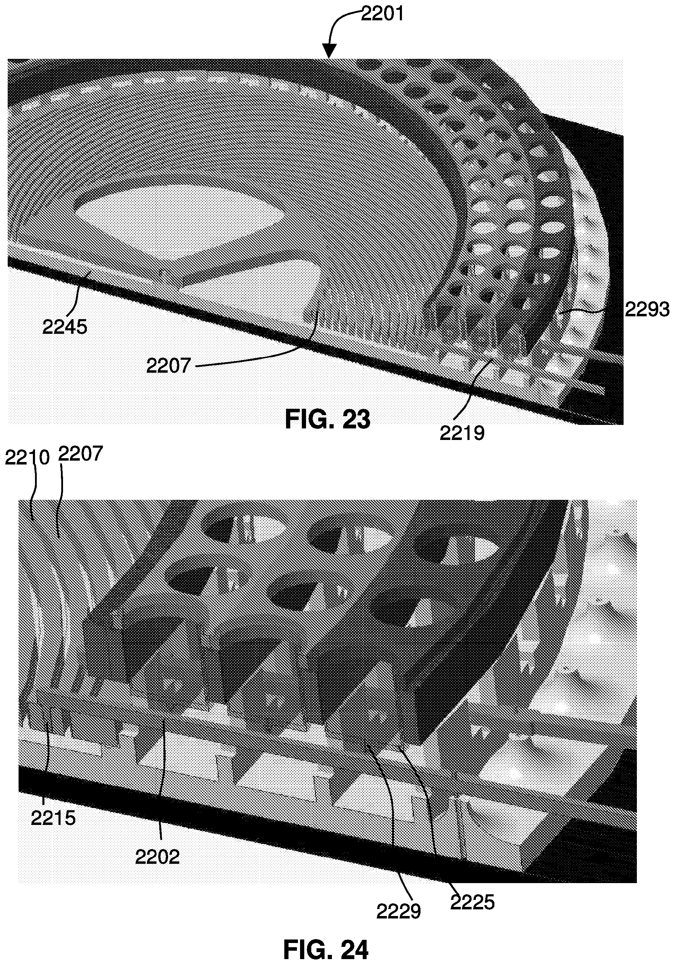

FIG 23 gives a cutaway view of the multi-well microfluidic device 2201. Each shuttle 2219 has a pin 2215 that engages a curved groove 2210 on the slot wheel 2207. Each shuttle is also constrained by shuttle guides 2293 formed in the base 2245. When the slot wheel 2207 is rotated, the curved grooves 2210 push the pins 2215, causing the shuttles 2219 to slide through the shuttle guides 2293 and translate under the outer perimeter of the rings.

FIG. 24 is a close-up of the cutaway view of the multi-well microfluidic device 2201. The multi-well microfluidic device 2201 includes a plurality of wells 225, each with a bottom port 2210. The device also comprises a shuttle 2202 with a pin 2015 that is configured to fit and slide within the curved grooves 2245 of the slot wheel 2207.

The shuttle 2202 comprises an upper open port 2249 that is configured to align with the open bottom port 2229 of the wells 2225. When upper open port 2249 aligns with open bottom port 2229 of a well 2225, liquid flows from the liquid compartment 2225 into the upper open port 2249 into a channel 2239 within shuttle 2219. The liquid from the wells 2225 can exit the channel 2239 within shuttle 2219 via an exit port 2214. The exit port 2214 may be located on the underneath side of the shuttle 2219. Exit port 2214 may align with a collection channel 2230. The collection channel 2230 may align with other microfluidic components to receive the droplet formed by the microfluidic device 2201. It should be appreciated that the upper open port 2249 of the shuttle 2219 may align with various wells 2225 to pick up several different liquid aliquots. The different liquid aliquots combine into a volume within the channel 2239 of shuttle 2239, and the formed volume may then be deposited into the collection channel 2230.

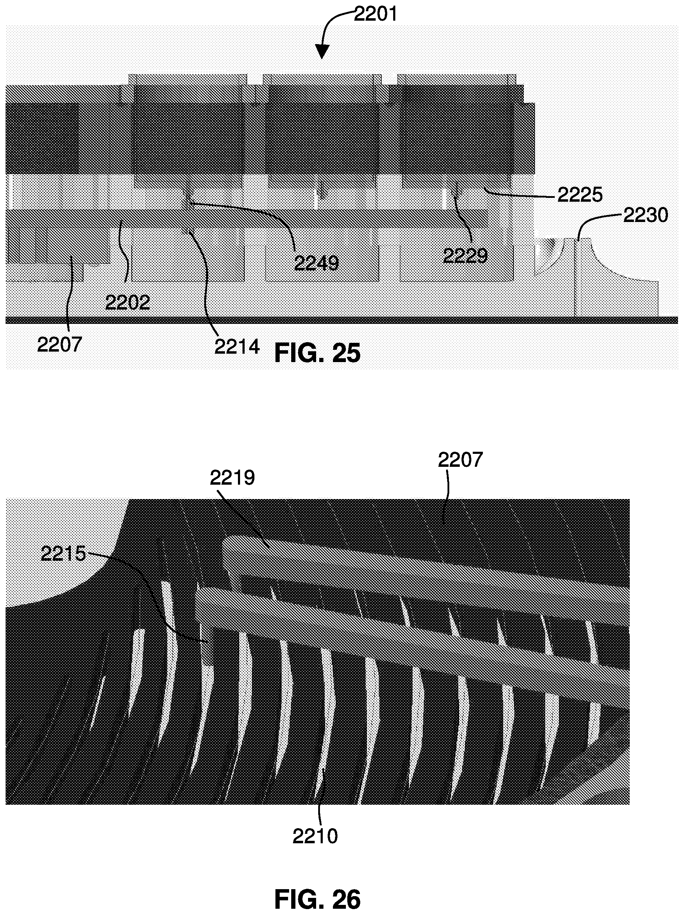

FIG. 25 gives a cross-section through the multi-well microfluidic device 2201. The wells 2225 each have an open bottom port 2229. The shuttle 2219 comprises upper open port 2249 and exit port 2214. When upper open port 2249 of the shuttle 2219 is aligned with an open bottom port 2229 of one of the wells 225, liquid from the well 225 flows into the channel 2239 within the shuttle 2219.

FIG. 26 is a detail view of the slot wheel 2207 of the multi-well microfluidic device 2201. The multi-well microfluidic device 2201 uses a plurality of shuttles 2219. Each shuttle 2219 has a pin 2215 that is configured to slide within the curved grooves 2210 of the slot wheel 2207. When the slot wheel 2207 turns, the pins 2215 slide within the curved grooves 2210 of the slot wheel 2207, causing the shuttles 2219 to move in a linear motion. The linear motion of the shuttle 2219 allows the upper open port of the shuttle to align with open bottom ports of the liquid compartments to cause liquid to flow from the liquid compartments into the shuttle.

Using the device described herein, a variety of methods and microfluidic operations may be performed.

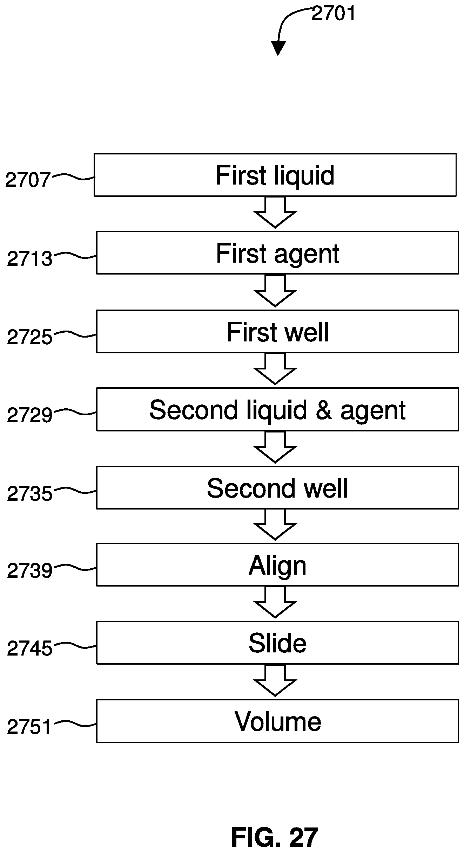

FIG. 27 diagrams steps of a method 2701 for combining agents into a liquid partition. The method 2701 includes providing 2707 a first liquid. The first liquid preferably contains 2713 a first agent. For example, the first agent may be a drug in solution in the first liquid. The first liquid is contained 2725 in a first well of a microfluidic device with a rotating ring and a shuttle, as shown herein. A second liquid is provided 2729 that includes a second agent. The second liquid is contained 2735 in a second well in the second ring of a microfluidic device. The method 2701 includes aligning 2739 a collection port of the shuttle with the first open port to cause a first aliquot of the first liquid to flow from the first well via the first open port into the collection port of the shuttle. The method 2701 further includes sliding 2745 the shuttle to align with a second open port at the bottom of the second well containing the second liquid thereby causing a second aliquot of the second liquid to flow into the collection port. Finally, the method 2701 includes merging 2715 the first aliquot and the second aliquot into a first liquid partition.

Preferably aligning the collection port of the shuttle with the first open port comprises forming a gap between the collection port of the shuttle and the first open port. In some embodiments, the merging step 2751 occurs within a channel extending through the shuttle, the channel being in liquid communication with the collection port. The first agent and the second agent may each be a cell, a drug, a molecule, a protein, a virus, a pathogen, a bacterium, and a compound.

In preferred embodiments, the output of a microfluidic device delivers the combined liquid volumes as droplets in an emulsion.

The term emulsion generally refers to a preparation of one liquid distributed in small globules (also referred to herein as drops or droplets) in the body of a second liquid. The first and second liquids are immiscible with each other. For example, the discontinuous phase can be an aqueous solution and the continuous phase can be a hydrophobic liquid such as an oil. This is termed a water in oil emulsion. Alternatively, the emulsion may be an oil in water emulsion. In that example, the first liquid, which is dispersed in globules, is referred to as the discontinuous phase, whereas the second liquid is referred to as the continuous phase or the dispersion medium. The continuous phase can be an aqueous solution and the discontinuous phase is a hydrophobic liquid, such as an oil (e.g., decane, tetradecane, silicon, or hexadecane). The droplets or globules of oil in an oil in water emulsion are also referred to herein as "micelles", whereas globules of water in a water in oil emulsion may be referred to as "reverse micelles".

The fluidic droplets may each be substantially the same shape and/or size. Alternatively, a first type droplet may be considerably larger than a second type droplet. The shape and/or size can be determined, for example, by measuring the average diameter or other characteristic dimension of the droplets. The average diameter of a plurality or series of droplets is the arithmetic average of the average diameters of each of the droplets. Those of ordinary skill in the art will be able to determine the average diameter (or other characteristic dimension) of a plurality or series of droplets, for example, using laser light scattering, microscopic examination, or other known techniques. Droplets may vary in size, where a first type droplet is larger than a second type droplet.

The droplets may comprise any liquid, or may comprise numerous portions of liquids from the liquid compartments. The droplet forming liquid is typically an aqueous buffer solution, such as ultrapure water (e.g., 18 mega-ohm resistivity, obtained, for example by column chromatography), 10 mM Tris HCl and 1 mM EDTA (TE) buffer, phosphate buffer saline (PBS) or acetate buffer. Any liquid or buffer that is physiologically compatible, with the population of molecules, cells or particles to be analyzed and/or sorted can be used. The liquid passing through the main channel and in which the droplets are formed is one that is immiscible with the droplet forming liquid. The liquid passing through the main channel can be a non-polar solvent, decane (e.g., tetradecane or hexadecane), fluorocarbon oil, silicone oil or another oil (for example, mineral oil).

The fluidic droplets may contain any combination of entities. As discussed above, the droplets are formed from the liquids in the liquid compartments. The liquid compartments may contain any type of agent. For example, the liquid compartments can contain drug molecules, chemical agents, elements, biological agents, nucleic acids, proteins, cells, etc. A droplet is formed by aligning the channel or port of the shuttle with the open bottom port of the liquid compartment. In certain instances, the invention provides for the production of droplets consisting essentially of a substantially uniform number of entities of a species therein (i.e., molecules, cells, particles, etc.). For example, about 90%, about 93%, about 95%, about 97%, about 98%, or about 99%, or more of a plurality or series of droplets may each contain the same number of entities of a particular species. For instance, a substantial number of fluidic droplets produced, e.g., as described above, may each contain 1 entity, 2 entities, 3 entities, 4 entities, 5 entities, 7 entities, 10 entities, 15 entities, 20 entities, 25 entities, 30 entities, 40 entities, 50 entities, 60 entities, 70 entities, 80 entities, 90 entities, 100 entities, etc., where the entities are molecules or macromolecules, cells, particles, etc. In some cases, the droplets may each independently contain a range of entities, for example, less than 20 entities, less than 15 entities, less than 10 entities, less than 7 entities, less than 5 entities, or less than 3 entities in some cases. In some embodiments, a droplet may contain 100,000,000 entities. In other embodiments, a droplet may contain 1,000,000 entities.

In a liquid containing droplets of liquid, some of which contain a species of interest and some of which do not contain the species of interest, the droplets of liquid may be screened or sorted for those droplets of liquid containing the species as further described below (e.g., using fluorescence or other techniques such as those described above), and in some cases, the droplets may be screened or sorted for those droplets of liquid containing a particular number or range of entities of the species of interest, e.g., as previously described. Thus, in some cases, a plurality or series of fluidic droplets, some of which contain the species and some of which do not, may be enriched (or depleted) in the ratio of droplets that do contain the species.

In some aspects of the invention the droplets may comprise sample liquid, discussed below. It should be appreciated that the sample liquid varies depending on the biological or chemical assay being performed within the droplet. In some embodiments, the liquid compartments contain the same sample liquid, but vary in the entity or agent contained therein. In assays involving biological processes, the sample liquid is typically an aqueous buffer solution, such as ultrapure water (e.g., 18 mega-ohm resistivity, obtained, for example by column chromatography), 10 mM Tris HCl and 1 mM EDTA (TE) buffer, phosphate buffer saline (PBS) or acetate buffer. In assays involving amplification and detection of nucleic acids, any liquid or buffer that is physiologically compatible with nucleic acid molecules can be used.

In assays related to cell culturing, the sample liquid may comprise cell medium. The cell medium provides the necessary nutrients, growth factors, and hormones for cell growths, as well as regulating the pH and the osmotic pressure of the culture. The cell culture medium may allow for and support growth of the cells thus being cultured, or the cell medium is a maintenance medium. Growth is understood as an increase in viable cell density during at least a certain period of the cell culture. A maintenance medium is a cell culture medium which supports cell viability but which does not encourage cell growth. See for example, cell culture medium related patents: US Patent 4,038,139, 1977; US Patent 7,258,998, 2007; US Patent App. 13/497,707, 2010; US Patent 8,338,177, 2012; and US Patent App. 13/695,002, 2011. The growth medium controls the pH of the culture and buffers the cells in culture against fluctuations in the pH. This buffering may be achieved by including an organic (e.g., HEPES) or $CO_2$ bicarbonate based buffer. Control of pH is needed to ensure the growth and health of cells in culture. Most normal mammalian cell lines grow well at pH 7.4, and there is very little variability among different cell strains.

The carrier fluid is one that is immiscible with the sample liquid. As used herein, carrier fluid and immisible liquids may be used interchangeably. The carrier fluid can be a non-polar solvent, decane (e g., tetradecane or hexadecane), fluorocarbon oil, silicone oil or another oil (for example, mineral oil). In an aspect of the invention, the carrier fluid forms a meniscus at the open end of the microfluidic channel, caused by surface tension. The meniscus can be either convex or concave, depending on the carrier fluid and the surface of the microfluidic channel.

In certain embodiments, the carrier fluid contains one or more additives, such as agents which increase, reduce, or otherwise create non-Newtonian surface tensions (surfactants) and/or stabilize droplets against spontaneous coalescence on contact. Surfactants can include Tween, Span, fluorosurfactants, and other agents that are soluble in oil relative to water. In some applications, performance is improved by adding a second surfactant, or other agent, such as a polymer or other additive, to the sample liquid. Surfactants can aid in controlling or optimizing droplet size, flow and uniformity. Furthermore, the surfactant can serve to stabilize aqueous emulsions in fluorinated oils from coalescing.

In certain embodiments, the droplets may be coated with a surfactant or a mixture of surfactants. Preferred surfactants that may be added to the carrier fluid include, but are not limited to, surfactants such as sorbitan-based carboxylic acid esters (e.g., the "Span" surfactants, Fluka Chemika), including sorbitan monolaurate (Span 20), sorbitan monopalmitate (Span 40), sorbitan monostearate (Span 60) and sorbitan monooleate (Span 80), and perfluorinated polyethers (e.g., DuPont Krytox 157 FSL, FSM, and/or FSH). Other non-limiting examples of non-ionic surfactants which may be used include polyoxyethylenated alkylphenols (for example, nonyl-, p-dodecyl-, and dinonylphenols), polyoxyethylenated straight chain alcohols, polyoxyethylenated polyoxypropylene glycols, polyoxyethylenated mercaptans, long chain carboxylic acid esters (for example, glyceryl and polyglycerl esters of natural fatty acids, propylene glycol, sorbitol, polyoxyethylenated sorbitol esters, polyoxyethylene glycol esters, etc.) and alkanolamines (e.g., diethanolamine-fatty acid condensates and isopropanolamine-fatty acid condensates).

Methods as discussed herein involve forming sample droplets in which some droplets contain zero, one, or multiple entities, such as cells. In the preferred embodiment, the distribution of entities (e.g., cells) within droplets obeys the Poisson distribution. However, methods for non-Poisson loading of droplets are known to those familiar with the art, and include but are not limited to active sorting of droplets, such as by laser-induced fluorescence, or by passive one-to-one loading. The description that follows assumes Poisson loading of droplets, but such description is not intended to exclude non-Poisson loading.

In certain embodiments, the droplets are aqueous droplets that are surrounded by an immiscible carrier fluid. In other embodiments, the droplets are non-aqueous droplets surrounded by an immiscible liquid, such as oil droplets in a water continuous phase. Methods of forming such droplets are shown for example in Link et al. (U.S. patent application numbers 2008/0014589, 2008/0003142, and 2010/0137163), Stone et al. (U.S.

patent number 7,708,949 and U.S. patent application number 2010/0172803), and Anderson et al. (U.S. patent number 7,041,481 and which reissued as RE41, 780).

In some embodiments, the sample liquid is aqueous, such as when employing a culture medium. The sample liquid is typically an aqueous buffer solution, such as ultrapure water (e.g., 18 mega-ohm resistivity, obtained, for example by column chromatography), 10 mM Tris HCl and 1 mM EDTA (TE) buffer, phosphate buffer saline (PBS) or acetate buffer. Any liquid or buffer that is physiologically compatible with the sample can be used. In the preferred embodiment, the sample liquid comprises cell medium, as disclosed above. The sample liquid comprises the necessary components to ensure cell health and growth. As discussed above, any laboratory produced or commercially available cell medium may be employed.

As discussed above, the carrier fluid is one that is immiscible with the sample liquid. The carrier fluid can be a non-polar solvent, decane (e g., tetradecane or hexadecane), fluorocarbon oil, silicone oil or another oil (for example, mineral oil). In a preferred embodiment of the invention, the carrier fluid has a high surface tension and therefore, is retained a microfluidic channel at an open end. In an aspect of the invention, the carrier fluid forms a meniscus at the open end of the microfluidic channel, caused by surface tension. The meniscus can be either convex or concave, depending on the carrier fluid and the surface of the microfluidic channel.

Key elements for using microfluidic channels to process droplets include producing droplet of the correct volume, producing droplets at the correct frequency and bringing together a first stream of sample droplets with a second stream of sample droplets in such a way that the frequency of the first stream of sample droplets matches the frequency of the second stream of sample droplets. In some embodiments of the present invention, gravitational forces control the flow rate within the device.

Methods for producing droplets of a uniform volume at a regular frequency are well known in the art. One method is to generate droplets using hydrodynamic focusing of a dispersed phase liquid and immiscible carrier fluid, such as disclosed in U.S. Publication No. US 2005/0172476. Feedback on the infusion rates of the carrier fluid and the dispersed liquid provides droplets that are uniform in size and generated at a fixed frequency over arbitrarily long periods of time.

Thus, using the systems and devices of the present invention, droplets containing various agents are generated. For example, as shown in FIG. 25, each well 2225 may contain a sample liquid with a different dissolved drug molecule. For example, one well may contain dissolved drug A, another well may contained dissolved drug B, and a third well may contain dissolved drug C. The shuttle 2219 is moved by the slot wheel, as described above. The shuttle 2219 slides along and without stopping, aligns briefly with each well so that a portion of liquid flows from the liquid compartment into the upper collection port 2249 on the shuttle 2219. The three liquid aliquots merge into a single partition.

In preferred embodiments, the shuttle 2219 slides along so that the exit port 2214 aligns with channel 2230 to dispense the droplet into channel 2230. The channel within the shuttle 2216, collection port 2249, and well 2225 may comprises an immiscible liquid, or may be coated with the substance the prevents the contents of the liquid compartments from adhering to the walls. Also, channel 930 may deliver the formed droplet to other microfluidic devices, or to other containment devices for further processing and analysis. Also, the shuttle 2219 continues its movements to ensure that additional volumes are formed (each with a unique combination of ingredients) and dispensed within exit channel 930.

The liquid partitions from the liquid compartments may merge into a single droplet. The fluidic portions may be of unequal size in certain cases. In certain cases, one or more series of portions may each consist essentially of a substantially uniform number of entities of a species therein (i.e., molecules, cells, particles, etc.). The fluidic droplets may be coalesced to start a reaction, and/or to stop a reaction, in some cases. For instance, a reaction may be initiated when a species in a first droplet contacts a species in a second droplet after the droplets coalesce, or a first droplet may contain an ongoing reaction and a second droplet may contain a species that inhibits the reaction. Embodiments of the invention are directed to alignment of microfluidic channels to promote the coalescence of fluidic droplets.

In embodiments in which droplets do not contain cells, droplets may coalesce, for example, upon application of an electric field. An aspect of the invention incorporates the application of an electric field. The applied electric field may induce a charge, or at least a partial charge, on a fluidic droplet surrounded by an immiscible liquid. Upon the application of an electric field, for example by producing a voltage across electrodes using a voltage source, droplets are induced to assume opposite charges or electric dipoles on the surfaces closest to each other, causing the droplets to coalesce.

In another aspect of the invention, droplets or liquid portions may fuse by joining the liquids, which may occur due to the charge-charge interactions between the two liquids. The creation of the bridge of liquid between the two droplets thus allows the two droplets to exchange material and/or coalesce into one droplet. Thus, in some embodiments, the invention provides for the coalescence of two separate droplets into one coalesced droplet in systems where such coalescence ordinarily is unable to occur, e.g., due to size and/or surface tension, etc. In some embodiments, one droplet is considerable smaller than another droplet. The smaller droplet merges or coalesces with the larger droplet to lower the internal pressure within the smaller droplet. Droplets close in proximity may merge passively.

In droplets containing cells, use of electrodes or electric fields to merge droplets may need to be avoided. Coalescing of droplets without the application of an electric field is described by Xu et al., "Droplet Coalescence in Microfluidic Systems," Micro and Nanosystems, 2011, 3, 131-136. The method described by Xu et al. merges droplets by allowing two droplets to have close contact with each other, causing the liquids of the two droplets to form a thin bridge between the two droplets. The methods described by Xu et al. are passive, where an external energy source is not needed. Passive merging can also be accomplished by channel geometry. See for example Gu et al., Int J Mol Sci. 2011; 12(4): 2572-2597. For example, droplet merging consists of a widening channel follow by a narrower channel. In this geometry the droplet velocity decreases in the widening channel, after which it increases again upon entry in the narrow channel. Droplets close in proximity merge.

Methods as discussed herein may incorporate liposomes. A liposome is an artificially-prepared spherical vesicle composed of a lamellar phase lipid bilayer. Liposomes are often composed of phosphatidylcholine-enriched phospholipids and may also contain mixed lipid chains with surfactant properties such as egg phosphatidylethanolamine. A liposome design may employ surface ligands. A liposome encapsulates a region of aqueous solution inside a hydrophobic membrane. Hydrophobic chemicals can be dissolved into the membrane, and therefore, the liposome can carry both hydrophobic molecules and hydrophilic molecules. In some aspects of the invention, a liquid compartment may be a liposome, or a liquid compartment may contain liposomes.

Liposomes are prepared by disrupting biological membranes (such as by sonication). In one method of formation, liposomes are formed when thin lipid films or lipid cakes are hydrated and stacks of liquid crystalline bilayers become liquid and swell. The hydrated lipid sheets detach during agitation and self-close to form large, multi-lamellar vesicles (LMV) which prevents interaction of water with the hydrocarbon core of the bilayer at the edges. Once these particles have formed, reducing the size of the particle requires energy input in the form of sonic energy (sonication) or mechanical energy (extrusion).

Properties of lipid formulations can vary depending on the composition (cationic, anionic, neutral lipid species), however, similar preparation method can be used for all lipid vesicles regardless of composition. See for example "Liposomes in Gene Delivery," Danilo D. Lasic, 1997, CRC Press LLC. Generally, the procedure involves preparation of the lipid for hydration, hydration with agitation, and sizing to a homogeneous distribution of vesicles. When preparing liposomes with mixed lipid composition, the lipids are dissolved and mixed in an organic solvent to assure a homogeneous mixture of lipids. Once the lipids are thoroughly mixed in the organic solvent, the solvent is removed to yield a lipid film. For small volumes of organic solvent (<1 mL), the solvent may be evaporated using a dry nitrogen or argon stream in a fume hood. For larger volumes, the organic solvent is removed by rotary evaporation yielding a thin lipid film on the sides of a round bottom flask. The lipid solution is transferred to containers and frozen by placing the containers on a block of dry ice or swirling the container in a dry ice-acetone or alcohol (ethanol or methanol) bath. Dry lipid films or cakes can be removed from the vacuum pump, the container close tightly and taped, and stored frozen until ready to hydrate. Hydration of the dry lipid film/cake is accomplished simply by adding an aqueous medium to the container of dry lipid and agitating. After addition of the hydrating medium, the lipid suspension should be maintained above the Tc during the hydration period. The hydration medium is generally determined by the application of the lipid vesicles. Suitable hydration media include distilled water, buffer solutions, saline, and nonelectrolytes such as sugar solutions. Physiological osmolality (290 mOsm/kg) is recommended for in vivo applications. Generally accepted solutions with meet these conditions are 0.9% saline, 5% dextrose, and 10% sucrose. During hydration some lipids form complexes unique to their structure. The product of hydration is a large, multi-lamellar vesicle (LMV). Once a stable, hydrated LMV suspension has been produced, the particles can be downsized by a variety of techniques, including sonication or extrusion. Disruption of LMV suspensions using sonic energy (sonication) typically produces small, uni-lamellar vesicles (SUV) with diameters in the range of 15-50 nm.

Second-generation liposomes may be incorporated into the present invention. Second-generation liposomes, or long-circulating liposomes, are obtained by modulating the lipid composition, size, and charge of the vesicle. The surface of the liposomes may be modified. For example, by incorporation of the synthetic polymer poly-(ethylene glycol) (PEG) in liposome composition. The presence of PEG on the surface of the liposomal carrier has been shown to extend blood-circulation time while reducing mononuclear phagocyte system uptake (stealth liposomes). See Immordino et al., Stealth liposomes: review of the basic science, rationale, and clinical applications, existing and potential, Int J Nanomedicine. Sep 2006; 1(3): 297-315.

Methods as discussed herein may incorporate micelles, an aggregate of surfactant molecules dispersed in a liquid colloid. A typical micelle in aqueous solution forms an aggregate with the hydrophilic "head" regions in contact with surrounding solvent, sequestering the hydrophobic single-tail regions in the micelle center. This phase is caused by the packing behavior of single-tail lipids in a bilayer. The difficulty filling all the volume of the interior of a bilayer, while accommodating the area per head group forced on the molecule by the hydration of the lipid head group, leads to the formation of the micelle. This type of micelle is known as a normal-phase micelle (oil-in-water micelle). Inverse micelles have the head groups at the center with the tails extending out (water-in-oil micelle). Micelles are approximately spherical in shape. Other phases, including shapes such as ellipsoids, cylinders, and bilayers, are also possible. The shape and size of a micelle are a function of the molecular geometry of its surfactant molecules and solution conditions such as surfactant concentration, temperature, pH, and ionic strength. The process of forming micelles is known as micellisation and forms part of the phase behavior of many lipids according to their polymorphism.

Methods as discussed herein may incorporate emulsions or droplets. An emulsion or droplet is an isolated portion of a first liquid that substantially or completely surrounded by a second liquid. In some cases, the first and second liquid may be completely surrounded by a third liquid. The liquids may be different liquids, or two liquids may be the same. For example, the first liquid may be an aqueous liquid, the second liquid may be an oil, and the third liquid may be an aqueous liquid. In other cases, the first liquid may be an oil, the second liquid may be an aqueous liquid, and the third liquid may be an oil. For example, droplets may also include water-in-oil-in-water (water/oil/water) emulsions. These droplets are composed of three layers: an internal aqueous phase layer, an inner oil phase layer, and an external aqueous phase layer. The droplet may contain an external oil phase layer. In this embodiment, the external oil layer encompasses two aqueous compartments. In some embodiments the oil phase layer is a thin layer separating the internal and external aqueous phases. The thin oil phase layer has a high permeability, serving as a thin membrane between the two aqueous compartments. The oil phase layer can be less than 50 microns thick, less than 30 microns thick, less than 20 microns thick, less than 10 microns thick, less than 5 microns thick, or less than 1 micron thick. In another embodiment, the external oil layer contains multiple aqueous compartments, where each aqueous compartment is surrounded by an oil layer.

The partitions may contain any biological or non-biological agent. In some embodiments, the partitions contain cells. In some embodiments, the partitions contain at least one molecule, at least one compound, or at least one element. In some embodiments, the partitions contain iPS cells. In some embodiments, the partitions contain iPS cells differentiated into varying cell types. A partition may contain one cell type while another partition contains a different cell type. For example, a partition may contain heart cells while another partition contains lung cells. The cells may be proximate to allow for cell-cell communication or signaling, or the cells may be separated to reduce signaling or other forms of cell-cell communication.

In certain examples, methods as discussed herein are used for chemical synthesis reactions or biological or chemical assays, such as sample preparation and analysis in a variety of fields in the art, including without limitation for many fields such as DNA sequencing, microarray sample preparation, genotyping, gene expression, biodefense, food monitoring, forensics, disease modeling, drug investigations, proteomics and cell biology. However, it should be appreciated that any material or species may be enveloped in a partition and processed in the device of the invention. For example, samples may be obtained from animals (including humans) and encompass liquids, solids, tissues, and gases. Biological samples include, without limitation, cells and any components thereof, blood products, such as plasma, serum and the like, proteins, peptides, amino acids, polynucleotide, lipids, carbohydrates, and any combinations thereof. The sample may include chemicals, organic or inorganic, used to interact with the interactive material. Environmental samples include environmental material such as surface matter, soil, water, crystals and industrial samples.

Systems and devices of the invention may relate to cell culturing. Cells may be contained within the liquid compartments, and then merged with liquids containing various agents and entities. In assays related to cell culturing, the sample liquid, or any liquid within any liquid compartment, may comprise cell medium. The cell medium provides the necessary nutrients, growth factors, and hormones for cell growths, as well as regulating the pH and the osmotic pressure of the culture. The cell culture medium may allow for and support growth of the cells thus being cultured, or the cell medium is a maintenance medium. Growth is understood as an increase in viable cell density during at least a certain period of the cell culture. A maintenance medium is a cell culture medium which supports cell viability but which does not encourage cell growth. See for example, cell culture medium related patents: US Patent 4,038,139, 1977; US Patent 7,258,998, 2007; U.S. Pub. 2013/0071925; US Patent 8,338,177, 2012; and U.S. Pub. 2013/0102032. The growth medium controls the pH of the culture and buffers the cells in culture against fluctuations in the pH. This buffering may be achieved by including an organic (e.g., HEPES) or $CO_2$ bicarbonate based buffer. Control of pH is needed to ensure the growth and health of cells in culture. Most normal mammalian cell lines grow well at pH 7.4, and there is very little variability among different cell strains.

Methods as discussed herein can incorporate any type of cell. In some embodiments, stem cells may be used. Pluripotent stem cells or induced pluripotent stem cells (also known as iPS cells or iPSCs) are a type of pluripotent stem cell that can be generated directly from adult cells. iPSCs are typically derived by introducing a specific set of pluripotency-associated genes, or "reprogramming factors," into a given cell type. The original set of reprogramming factors (also dubbed Yamanaka factors) are the genes Oct4 (Pou5f1), Sox2, cMyc, and Klf4.

Somatic cells may be reprogrammed into induced pluripotent stem cells (iPSCs) using known methods such as the use of defined transcription factors. The iPSCs are characterized by their ability to proliferate indefinitely in culture while preserving their developmental potential to differentiate into derivatives of all three embryonic germ layers. In certain embodiments, fibroblasts are converted to iPSC by methods such as those discussed in Takahashi and Yamanaka, 2006, Induction of pluripotent stem cells from mouse embryonic and adult fibroblast cultures by defined factors Cell 126:663-676.; and Takahashi, et al., 2007, Induction of pluripotent stem cells from adult human fibroblasts by defined factors, Cell 131:861-872.

Induction of pluripotent stem cells from adult fibroblasts can be done by methods that include introducing four factors, Oct3/4, Sox2, c-Myc, and Klf4, under ES cell culture conditions. Human dermal fibroblasts (HDF) are obtained. A retrovirus containing human Oct3/4, Sox2, Klf4, and c-Myc is introduced into the HDF. Six days after transduction, the cells are harvested by trypsinization and plated onto mitomycin C-treated SNL feeder cells. See, e.g., McMahon and Bradley, 1990, Cell 62:1073-1085. About one day later, the medium (DMEM containing 10% FBS) is replaced with a primate ES cell culture medium supplemented with 4 ng/mL basic fibroblast growth factor (bFGF). See Takahashi, et al., 2007, Cell 131:861. Later, hES cell-like colonies are picked and mechanically disaggregated into small clumps without enzymatic digestion. Each cell should exhibit morphology similar to that of human ES cells, characterized by large nuclei and scant cytoplasm. The cells after transduction of HDF are human iPS cells. DNA fingerprinting, sequencing, or other such assays may be performed to verify that the iPS cell lines are genetically matched to the donor.

Methods as discussed herein allow for iPS cells to be transfected to model a particular disease. iPS cells can also be used in modeling of infectious diseases. Human induced pluripotent stem cells (iPSCs) offer the ability to produce host-specific differentiated cells and thus have the potential to transform the study of infectious disease; and iPSC models of infectious disease have been described. Hepatocyte-like cells derived from iPSCs support the entire life cycle of hepatitis C virus, including inflammatory responses to infection, enabling studies of how host genetics impact viral pathogenesis. See Schwartz et al., 2012, PNAS 109(7):2544-2548.

The specific culture conditions may vary depending on the cell type. However, most culture conditions consist of a suitable vessel containing a substrate or medium that supplies the essential nutrients (amino acids, carbohydrates, vitamins, and minerals), growth factors, hormones and gases ($O_2$, $CO_2$). Furthermore, the physicochemical environment (pH, osmotic pressure, temperature) must be regulated. Cells may be grown floating in the culture medium (suspension culture) or grown while attached to a solid or semi-solid substrate (adherent or monolayer culture). In some embodiments, the devices and systems may be kept in an isothermal environment.

Cells are grown and maintained at an appropriate temperature and gas mixture (typically, 37 °C, 5% $CO_2$ for mammalian cells), usually in a cell incubator.

Culture conditions vary widely for each cell type, and variation of conditions for a particular cell type can result in different phenotypes. See for example, Tsai et al., "Isolation of human multipotent mesenchymal stem cells from second-trimester amniotic liquid using a novel two-stage culture protocol," Hum. Reprod. (2004) 19 (6): 1450-1456. doi: 10.1093/humrep/deh279, where amniotic liquid-derived mesenchymal stem cells (AFMSCs) were cultured to confluence and shifted to osteogenic medium (a-MEM supplemented with 10% FBS, 0.1 μmol/l dexamethason, 10 mmol/l β-glycerol phosphate, 50 μmol/l ascorbate) and adipogenic medium (α-MEM supplemented with 10% FBS, 1 μmol/l dexamethasone, 5 μg/ml insulin, 0.5 mmol/l isobutylmethylxanthine and 60 μmol/l indomethacin) for 3 weeks. For differentiation of neural cells, AFMSCs were incubated with α-MEM supplemented with 20% FBS, 1 mmol/l β-mercaptoethanol, 5 ng/ml bFGF (Sigma, St Louis) for 24 h, and then treated with serum depletion for 5 h.

The cell medium provides the necessary nutrients, growth factors, and hormones for cell growths, as well as regulating the pH and the osmotic pressure of the culture. The cell culture medium according to the present invention is a medium allowing for and supporting growth of the animal cells thus cultured. Growth is understood as an increase in viable cell density during at least a certain period of the cell culture. According to the present invention, such definition of 'growth medium' is to be understood as being opposed to the term 'maintenance medium' in its usual meaning in the art. A maintenance medium is a cell culture medium which supports cell viability but which does not encourage cell growth. Often, such maintenance media do not contain essential growth factors such as transferrin, insulin, albumin and the like. See for example, cell culture medium related patents: US Patent 4,038,139; US Patent 7,258,998; and US Patent 8,338,177.

The growth medium controls the pH of the culture and buffers the cells in culture against fluctuations in the pH. This buffering may be achieved by including an organic (e.g., HEPES) or $CO_2$ bicarbonate based buffer. Control of pH is needed to ensure the growth and health of cells in culture. Most normal mammalian cell lines grow well at pH 7.4, and there is very little variability among different cell strains. However, some transformed cell lines have been shown to grow better at slightly more acidic environments (pH 7.0-7.4), and some normal fibroblast cell lines prefer slightly more basic environments (pH 7.4-7.7). Because the pH of the medium is dependent on the delicate balance of dissolved carbon dioxide ($CO_2$) and bicarbonate ($HCO_3$), changes in the atmospheric $CO_2$ can alter the pH of the medium. Therefore, it is necessary to use exogenous $CO_2$ when using media buffered with a $CO_2$ bicarbonate based buffer, especially if the cells are cultured in open dishes or transformed cell lines are cultured at high concentrations. While most researchers usually use 5-7% $CO_2$ in air, 4-10% $CO_2$ is common for most cell culture experiments. However, each medium has a recommended CO2 tension and bicarbonate concentration to achieve the correct pH and osmolality.

The optimal temperature for cell culture largely depends on the body temperature of the host from which the cells were isolated, and to a lesser degree on the anatomical variation in temperature (e.g., temperature of the skin may be lower than the temperature of skeletal muscle). Overheating is a more serious problem than under heating for cell cultures; therefore, often the temperature in the incubator is set slightly lower than the optimal temperature. Most human and mammalian cell lines are maintained at 36°C to 37°C for optimal growth. Insect cells are cultured at 27°C for optimal growth; they grow more slowly at lower temperatures and at temperatures between 27°C and 30°C. Above 30°C, the viability of insect cells decreases, and the cells do not recover even after they are returned to 27°C. Avian cell lines require 38.5°C for maximum growth. Although these cells can also be maintained at 37°C, they will grow more slowly. Cell lines derived from cold-blooded animals (e.g., amphibians, cold-water fish) tolerate a wide temperature range between 15°C and 26°C. The consequences of deviating from the culture conditions required for a particular cell type can range from the expression of aberrant phenotypes to a complete failure of the cell culture.

Sub-culturing, or passaging, is the removal of the medium and transfer of cells from a previous culture into fresh growth medium, a procedure that enables the further propagation of the cell line or cell strain. Traditionally, to keep the cells at an optimal density for continued growth and to stimulate further proliferation, the culture has to divided and fresh medium supplied. For example, sub-culturing could be needed if a drop in pH is observed. A drop in the pH of the growth medium usually indicates a buildup of lactic acid, which is a by-product of cellular metabolism. Lactic acid can be toxic to the cells, and the decreased pH can be sub-optimal for cell growth.

As cells generally continue to divide in culture, they generally grow to fill the available area or volume. This can generate several issues: nutrient depletion in the growth media; changes in pH of the growth media; and accumulation of dead cells. Cell-to-cell contact can stimulate cell cycle arrest, causing cells to stop dividing, known as contact inhibition. Cell-to-cell contact can also stimulate cellular differentiation. Genetic and epigenetic alterations, with a natural selection of the altered cells potentially leading to overgrowth of abnormal, culture-adapted cells with decreased differentiation and increased proliferative capacity. Therefore, processing of the cells to ensure removal of harmful species and replenishment of cell medium is needed every 1-3 days, depending on the particular protocol.

Traditionally, cell viability is determined by staining the cells with trypan blue. As trypan blue dye is permeable to non-viable cells or death cells whereas it is impermeable to this dye. Stain the cells with trypan dye and load to haemocytometer and calculate % of viable cells. Cell viability is calculated as the number of viable cells divided by the total number of cells within the grids on the hemacytometer. If cells take up trypan blue, they are considered non-viable. It would be appreciated by one skilled in the art for the optical detection of cells containing trypan blue.

In the present invention, cells are encapsulated in partitions containing cell medium. The cells can be flowed from various chambers via the multichannel system of the invention. Microfluidic channels can be aligned to cause flow of the partitions into a humidifier chamber. For example, mammalian cells are grown in humidified atmosphere at 37° C and 5% CO2, in cell culture incubators. Microfluidic channels can be aligned to deliver CO2 to the humidifier chamber within the multichannel system by aligning microfluidic channels that seal, or by an inlet microfluidic channel configured to deliver liquids or gases to the chamber. It should be appreciated that alignment of microfluidic channels of the invention can be sealed to allow for the transport of gases. To replenish or re-suspend the cells in fresh growth medium, which could be required every 2-3 days, the partitions are flowed from a chamber into the microfluidic channels to be merged or coalesced with fresh growth medium. It should be appreciated that partitions containing cells during culturing may be retained within microfluidic channels or chambers of the present invention. After merging or coalesced with fresh growth medium, the partitions may be retained within microfluidic channels, or the cells may be diverted to a chamber.

In an embodiment of the invention, cells are grown in nanoliter-microliter partitions in cell medium that is replenished every 2-3 days. In some assays, cells may require splitting every 2-3 days. Media change involves adding one or more partitions of fresh media to a partition of incubated cells and thereby partially replenishing growth media. Merging of partitions is discussed above. Cells are further incubated in the combined partition or in smaller partitions generated by splitting the combined partition. Cell subculture or splitting is achieved similarly to media change by combining (merging and mixing) a partition of incubated cells and a partition of fresh media, splitting the combined partition, and repeating this procedure using the split partition(s) until a desired cell concentration is reached. Final partitions are then incubated, while other partitions of suspended cells generated in the subculturing process are discarded. Incubation can be accomplished within the microfluidic channels of the device, or in chambers of the device. One or more thermal regulators can be employed to ensure proper temperature.

In a multiplexed assay, multiple partitions containing one kind or multiple kinds of cells are exposed to partitions containing one or multiple reagents and are assayed similarly to the assays described above. A multiplex device can also be used for multiplex cell culture, where cells can be grown and maintained in multiple partitions.

Employing the methods discussed herein, iPS cells are encased in partitions containing cell medium and related growth factors. The iPS cell partitions are cultured by techniques and methods discussed above, or known in the art. iPS cell partitions can be merged with other materials and reactants, including maintenance medium, transfection reagents, etc. during the incubation process. For example, stem cells may be contained within droplets within a liquid compartment. The shuttle may pick up a droplet containing a stem cell, and may pick up additional portions of liquids. The droplet containing the stem cell and the other liquid partitions may be merged.

iPS cell partitions may be used in expression profiling where target compounds are introduced into the partitions by methods disclosed herein. In order to use expression analysis for disorder diagnosis, a threshold of expression is established. The threshold may be established by reference to literature or by using a reference sample from a subject known not to be afflicted with the disorder. The expression may be over-expression compared to the reference (i.e., an amount greater than the reference) or under-expression compared to the reference (i.e., an amount less than the reference). In expression profiling, the iPS cell partitions are merged with partitions containing target compounds and allowed to further incubate, which may involve splitting of partitions, i.e. splitting of cell cluster, and merging of partitions, i.e. introduction of freshcell medium. Methods disclosed herein may be used to detect any disorder or compound effect. The iPS cell partitions may be flowed passed a detector to screen for abnormalities, or diverted to a collection chamber for analysis.

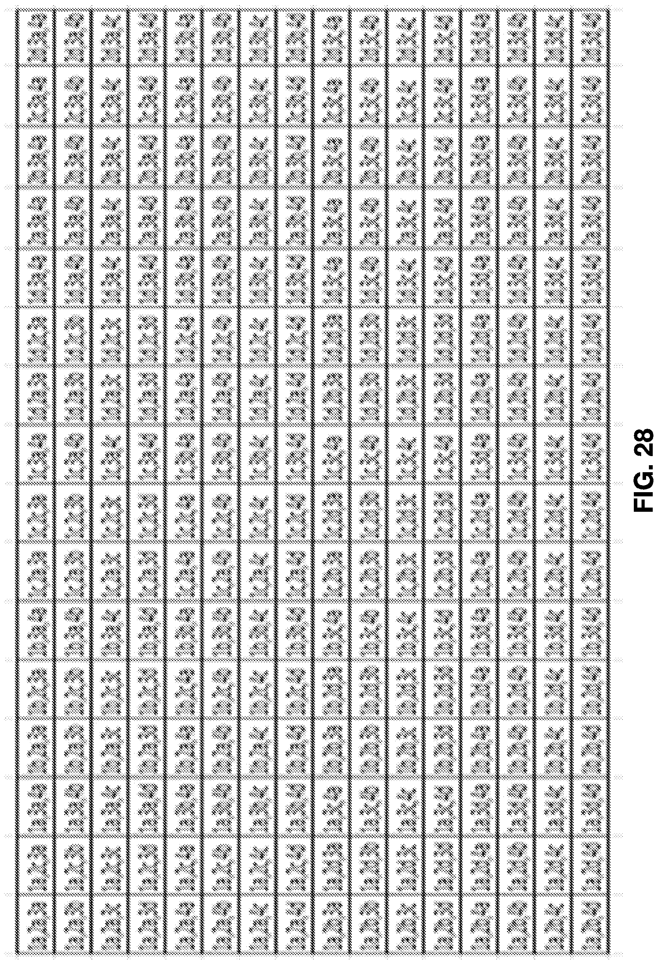

FIG. 28 is a chart of combination that may be made using a device of the invention. With reference back to FIG. 21, the liquid wells on the rings may be dubbed 1a, 1b, 1c, 1d, 2a, 2b, 2c, 2d, 3a, 3b, 3c, 3d, 4a, 4b, 4c, and 4d. When a shuttle aligns with an open bottom port, the liquid flows from the corresponding well and into the channel of the shuttle. Thus, if the shuttle aligns with wells 1a, 2a, and 3a, the channel will pick up aliquots of liquid from wells 1a, 2a, and 3a and combine those liquids into a single volume.

Thus, if each well contains a different reagent, drug, molecule, solutions, etc., the volume formed within the channel of the shuttle will contain the agents from those three wells. As shown in FIG. 28, if the shuttle was to just combine liquids from the circumferential direction, the shuttle could combine liquids 1a, 2a, 3a; 1b, 2b, 3b; and 1d, 2d, 3d. If the shuttle combined liquids based on radial motion, liquids from 1a, 2b, 3c; 2a, 3b, 4c; 3a, 4b, 1c; and 4a, 1b, 2c would be combined. By being able to combine liquids in both circumferential and radial motions, vast combinations of the liquids can occur. It should be appreciated that endless combinations of liquids can be accomplished using the systems of the present invention.

Various modifications of the invention and many further embodiments thereof, in addition to those shown and described herein, will become apparent to those skilled in the art from the full contents of this document, including references to the scientific and patent literature cited herein. The subject matter herein contains important information, exemplification and guidance that can be adapted to the practice of this invention.

## Claims

1. A microfluidic device comprising

   a platform with an axle member extending therefrom;
   a slot wheel engaged to the axle member and capable of rotation relative to the platform, the slot wheel having a substantially flat, circular upper surface;
   a first ring member supported by the axle member and disposed about the slot wheel, the first ring member comprising at least one well open at the top and having an open dispensing port at the bottom; and
   a shuttle engaged with the slot wheel such that rotation of the slot wheel converts to linear motion of the shuttle, wherein the shuttle comprises a collection port and the linear motion of the shuttle aligns the collection port with the dispensing port causing liquid to flow from the well into the collection port.

2. The device of claim 1, wherein the first ring member is configured to rotate relative to the platform and the slot wheel.

3. The device of claim 2, further comprising a second ring, wherein the second ring is concentric with the first ring.

4. The device of claim 3, wherein the shuttle comprises an elongated body having a distal portion and proximate portion, wherein the proximate portion comprises a pin.

5. The device of claim 4, wherein the flat, circular upper surface of the slot wheel contains at least one curved groove to receive the pin.

6. The device of claim 5, wherein the pin is configured to slide within the curved groove of the slot wheel.

7. The device of claim 6, further comprising at least one motor to drive rotation of the slot wheel.

8. The device of claim 7, wherein the curved grooves are configured to convert the rotation of the slot wheel to the linear motion of the shuttle.

**9.** The device of claim 5, wherein the dispensing port of the well bottom has an opening that is less than 1.0 mm in any direction.

**10.** The device of claim 9, wherein the dispensing port of the well bottom has an opening that is less than 0.5 mm in any direction.

**11.** The device of claim 9, wherein the ring member comprises a plurality of wells.

**12.** The device of claim 5, wherein the distal region of the shuttle further comprises a dispensing port.

**13.** The device of claim 12, wherein the collection port and the dispensing port of the shuttle are in liquid communication through a channel.

**14.** The device of claim 13, wherein the dispensing port is located on a surface opposite to the collection port.

**15.** The device of claim 13, wherein the dispensing port is configured to align with a collection channel located outside of the platform, wherein when aligned, liquid flows from the dispensing port of the shuttle into the collection channel.

**Patentansprüche**

**1.** Mikrofluidikvorrichtung, die Folgendes umfasst:

eine Plattform mit einem Achsenelement, das sich daraus erstreckt;
ein Schlitzrad im Eingriff mit dem Achsenelement, das geeignet ist, eine Rotation relativ zur Plattform auszuführen, wobei das Schlitzrad eine im Wesentlichen flache, kreisförmige Oberfläche aufweist;
ein erstes Ringelement, das durch das Achsenelement gelagert ist und um das Schlitzrad herum angeordnet ist, wobei das erste Ringelement zumindest eine auf der Oberseite offene Einbuchtung umfasst und eine offene Abgabeöffnung auf der Unterseite aufweist; und
einen Schlitten im Eingriff mit dem Schlitzrad, sodass sich die Rotation des Schlitzrads in eine lineare Bewegung des Schlittens umwandelt, wobei der Schlitten eine Auffangöffnung umfasst, und die lineare Bewegung des Schlittens die Auffangöffnung mit der Abgabeöffnung fluchtend ausrichtet, sodass Flüssigkeit von der Einbuchtung in die Auffangöffnung fließt.

**2.** Vorrichtung nach Anspruch 1, wobei das erste Ringelement ausgebildet ist, um sich relativ zur Plattform und dem Schlitzrad zu drehen.

**3.** Vorrichtung nach Anspruch 2, die ferner einen zweiten Ring umfasst, wobei der zweite Ring mit dem ersten Ring konzentrisch ist.

**4.** Vorrichtung nach Anspruch 3, wobei der Schlitten einen länglichen Körper umfasst, der einen distalen und einen proximalen Abschnitt aufweist, wobei der proximale Abschnitt einen Stift umfasst.

**5.** Vorrichtung nach Anspruch 4, wobei die flache, kreisförmige Oberfläche des Schlitzrads zumindest eine gebogene Vertiefung umfasst, um den Stift aufzunehmen.

**6.** Vorrichtung nach Anspruch 5, wobei der Stift ausgebildet ist, um in der Vertiefung des Schlitzrads zu gleiten.

**7.** Vorrichtung nach Anspruch 6, die ferner zumindest einen Motor umfasst, um die Rotation des Schlitzrads anzutreiben.

**8.** Vorrichtung nach Anspruch 7, wobei die gebogenen Vertiefungen ausgebildet sind, um die Rotation des Schlitzrads in die lineare Bewegung des Schlittens umzuwandeln.

**9.** Vorrichtung nach Anspruch 5, wobei die Abgabeöffnung der Einbuchtungsunterseite eine Öffnung aufweist, die in jede Richtung weniger als 1,0 mm beträgt.

**10.** Vorrichtung nach Anspruch 9, wobei die Abgabeöffnung der Einbuchtungsunterseite eine Öffnung aufweist, die in jede Richtung weniger als 0,5 mm beträgt.

**11.** Vorrichtung nach Anspruch 9, wobei das Ringelement eine Vielzahl von Einbuchtungen umfasst.

**12.** Vorrichtung nach Anspruch 5, wobei der distale Bereich des Schlittens ferner eine Abgabeöffnung umfasst.

**13.** Vorrichtung nach Anspruch 12, wobei die Auffangöffnung und die Abgabeöffnung des Schlittens über einen Kanal in flüssiger Kommunikation stehen.

**14.** Vorrichtung nach Anspruch 13, wobei die Abgabeöffnung auf einer Oberfläche gegenüber der Auffangöffnung angeordnet ist.

**15.** Vorrichtung nach Anspruch 13, wobei die Abgabeöffnung ausgebildet ist, um mit einem Auffangkanal, der außerhalb der Plattform angeordnet ist, fluchtend ausgerichtet zu werden, wobei bei einer fluchtenden Ausrichtung Flüssigkeit von der Abgabeöffnung des Schlittens in den Auffangkanal fließt.

**Revendications**

1. Dispositif microfluidique comprenant
   une plate-forme avec un élément d'axe s'étendant à partir de celle-ci ;
   une roue à fentes mise en prise avec l'élément d'axe et capable de rotation par rapport à la plate-forme, la roue à fentes ayant une surface supérieure circulaire sensiblement plate ;
   un premier élément annulaire supporté par l'élément d'axe et disposé autour de la roue à fentes, le premier élément annulaire comprenant au moins un puits ouvert au niveau du haut et ayant un orifice de distribution ouvert au niveau du bas ; et
   une navette en prise avec la roue à fentes de telle sorte qu'une rotation de la roue à fentes se transforme en un mouvement linéaire de la navette, dans lequel la navette comprend un orifice de collecte et le mouvement linéaire de la navette aligne l'orifice de collecte avec l'orifice de distribution en amenant du liquide à s'écouler depuis le puits jusque dans l'orifice de collecte.

2. Dispositif selon la revendication 1, dans lequel le premier élément annulaire est configuré pour tourner par rapport à la plate-forme et à la roue à fentes.

3. Dispositif selon la revendication 2, comprenant en outre un second anneau, dans lequel le second anneau est concentrique par rapport au premier anneau.

4. Dispositif selon la revendication 3, dans lequel la navette comprend un corps allongé ayant une partie distale et une partie proximale, dans lequel la partie proximale comprend une broche.

5. Dispositif selon la revendication 4, dans lequel la surface supérieure plate et circulaire de la roue à fentes contient au moins une gorge incurvée pour recevoir la broche.

6. Dispositif selon la revendication 5, dans lequel la broche est configurée pour coulisser dans la rainure incurvée de la roue à fentes.

7. Dispositif selon la revendication 6, comprenant en outre au moins un moteur pour entraîner une rotation de la roue à fentes.

8. Dispositif selon la revendication 7, dans lequel les gorges incurvées sont configurées pour convertir la rotation de la roue à fentes en le mouvement linéaire de la navette.

9. Dispositif selon la revendication 5, dans lequel l'orifice de distribution du bas de puits a une ouverture qui est inférieure à 1,0 mm dans n'importe quelle direction.

10. Dispositif selon la revendication 9, dans lequel l'orifice de distribution du bas de puits a une ouverture qui est inférieure à 0,5 mm dans n'importe quelle direction.

11. Dispositif selon la revendication 9, dans lequel l'élément annulaire comprend une pluralité de puits.

12. Dispositif selon la revendication 5, dans lequel la région distale de la navette comprend en outre un orifice de distribution.

13. Dispositif selon la revendication 12, dans lequel l'orifice de collecte et l'orifice de distribution de la navette sont en communication fluidique à travers un canal.

14. Dispositif selon la revendication 13, dans lequel l'orifice de distribution est situé sur une surface opposée à l'orifice de collecte.

15. Dispositif selon la revendication 13, dans lequel l'orifice de distribution est configuré pour s'aligner sur un canal de collecte situé à l'extérieur de la plate-forme, dans lequel, lorsqu'ils sont alignés, le liquide s'écoule de l'orifice de distribution de la navette jusque dans le canal de collecte.

**FIG. 1**

**FIG. 2**

**FIG. 3**

**FIG. 4**

**FIG. 5**

**FIG. 6**

**FIG. 8**

**FIG. 7**

**FIG. 9**

137

1021

1033

**FIG. 10**

1021

**FIG. 11**

107

110

1217

**FIG. 12**

1321

1333

107

**FIG. 13**

193

131

193

193

193

**FIG. 14**

**FIG. 15**

**FIG. 16**

**FIG. 17**

**FIG. 18**

**FIG. 19**

**FIG. 20**

**FIG. 21**

FIG. 22

FIG. 23

FIG. 24

**FIG. 25**

**FIG. 26**

2701

2707 — First liquid

2713 — First agent

2725 — First well

2729 — Second liquid & agent

2735 — Second well

2739 — Align

2745 — Slide

2751 — Volume

**FIG. 27**

**FIG. 28**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014001781 A
- WO 2014071258 A
- WO 2015173658 A
- US 5523162 A
- US 4038139 A
- US 7258998 B
- US 13497707 B
- US 8338177 B
- US 13695002 B
- US 20080014589 A, Link
- US 20080003142 A
- US 20100137163 A
- US 7708949 B, Stone
- US 20100172803 A
- US 7041481 B, Anderson
- US RE41780 E
- US 20050172476 A
- US 20130071925 A
- US 20130102032 A

### Non-patent literature cited in the description

- **XU et al.** Droplet Coalescence in Microfluidic Systems. *Micro and Nanosystems,* 2011, vol. 3, 131-136
- **GU et al.** *Int J Mol Sci.,* 2011, vol. 12 (4), 2572-2597
- **DANILO D. LASIC.** Liposomes in Gene Delivery. CRC Press LLC, 1997
- **IMMORDINO et al.** Stealth liposomes: review of the basic science, rationale, and clinical applications, existing and potential. *Int J Nanomedicine,* September 2006, vol. 1 (3), 297-315
- **TAKAHASHI ; YAMANAKA.** Induction of pluripotent stem cells from mouse embryonic and adult fibroblast cultures by defined factors. *Cell,* 2006, vol. 126, 663-676
- **TAKAHASHI et al.** Induction of pluripotent stem cells from adult human fibroblasts by defined factors. *Cell,* 2007, vol. 131, 861-872
- **MCMAHON ; BRADLEY.** *Cell,* 1990, vol. 62, 1073-1085
- **TAKAHASHI et al.** *Cell,* 2007, vol. 131, 861
- **SCHWARTZ et al.** *PNAS,* 2012, vol. 109 (7), 2544-2548
- **TSAI et al.** Isolation of human multipotent mesenchymal stem cells from second-trimester amniotic liquid using a novel two-stage culture protocol. *Hum. Reprod.,* 2004, vol. 19 (6), 1450-1456